# EUROPEAN PATENT SPECIFICATION

(11) **EP 3 079 550 B1**
(45) Date of publication and mention of the grant of the patent: **20.09.2023**
(21) Application number: 14821818.3
(22) Date of filing: 28.11.2014
(51) Int. Cl.: A47K 11/02

(54) **DISPENSER FOR FLEXIBLE TUBING**
AUSGABEVORRICHTUNG FÜR FLEXIBLE ROHRLEITUNG
DISTRIBUTEUR DE TUYAUX SOUPLES

(30) Priority: 13.12.2013 GB 201322066
(43) Date of publication of application: 19.10.2016
(73) Proprietor: Loowatt Ltd, Liverpool L2 5RH (GB)
(72) Inventor: GALAN BERTRAN, Mariona, London Greater London SW2 2LA (GB); COSTA, Fernanda, London Greater London SW2 2LA (GB); GARDINER, Virginia Summerfield, London Greater London SW2 2LA (GB); GARDINER, Polly Rosemary, London Greater London SW2 2LA (GB); HOLDEN, Christopher James, London Greater London SW2 2LA (GB); PALMER, Susannah Frances Diana, London Greater London SW2 2LA (GB); PURVES, Iain James, London Greater London SW2 2LA (GB); ZHANG, Jing Jing, London Greater London SW2 2LA (GB)
(74) Representative: Haseltine Lake Kempner LLP
(86) International application number: PCT/GB2014/053552
(87) International publication number: WO 2015/087048

(56) References cited:
- EP-A1- 2 295 341
- WO-A1-02/100723
- WO-A1-2013/132331
- DE-A- 2 457 093
- DE-A1- 2 457 093
- GB-A- 2 450 439
- JP-U- H0 613 686
- US-A- 3 908 336
- US-A- 5 899 049
- US-A1- 2003 121 923

## Description

This application relates to a dispenser of flexible tubing, for fitting to a toilet.

### Background

Some types of waste disposal apparatus include a flexible tubing that fits within the apparatus and can be dispensed as necessary. Such waste disposal apparatus includes 'waterless' toilets and nappy/diaper disposal units. A waterless toilet is one that does not require water to flush, and can be useful as portable toilets or in regions where water is scarce. In such toilets, the flexible tubing is folded and stored in a concertina fashion in an annular shape, the annular shape typically corresponding to an open aperture in the top of the toilet. The tubing can be sealed at one end, then can be fed downwards through the toilet housing via, for example rollers, that pinch the edge of the bag. Such a waterless toilet is described in US 2009/0255045.

Recent developments include a toilet that allows for the separation of solid and liquid waste. Such a toilet is described in International Patent Application, WO 2011/144950. Further JP H06 13686 U is disclosing a tubular body protruding from the lower part of the toilet bowl and a synthetic resin sheet tube that is pulled in the longitudinal direction.

The flexible tubing in the toilets needs to be replaced from time to time. However, the current dispensers that are commercially available will often have a rigid outer plastic casing, which adds to waste. Compacting and packaging the currently available tubing can be a difficult and complex operation, which adds to the cost of production. Additionally, in the context of the toilet especially, there is a need for improved design, so that the handling of the tubing during its fitting in a toilet, its operation and subsequent removal minimise the possible contact of a user with potentially soiled surfaces of the tubing and toilet.

### Summary of the Invention

The present invention relates to a combination of a toilet, a dispenser of flexible tubing and a hollow member, as defined in claim 1.

The present inventors have found that providing a flexible outer web can save packaging, and provide a lighter, more adaptable dispenser. For example, the dispenser can adapt to different shapes, and so can be fitted on a variety of shapes of units in a waste disposal apparatus. In its closed state, the flexible web maintains the compacted form of the tubing. By using a flexible web, this also simplifies the manufacturing the dispenser. Additionally, the flexible web extending into the aperture of the ring of compacted flexible tubing acts as a guide when the dispenser is placed onto a hollow shaft of a waste disposal apparatus, and avoids the concertinaed inner surface of the tubing being caught upon and possibly damaged by any components of a waste disposal apparatus, such as a hollow shaft, which, as mentioned, the dispenser may be placed onto.

Also described herein is a dispenser of flexible tubing, for fitting to a waste disposal apparatus, the dispenser comprising:
a compacted flexible tubing in the form of a ring having an aperture extending therethrough,
the flexible tubing, in uncompacted form, having first and second ends, wherein, in use, the flexible tubing can be dispensed from the dispenser, such that the first end can be passed through the aperture, the dispenser being adapted to prevent the second end of the tubing passing through the aperture. The present inventors have found that, with waste disposal devices of the prior art that dispense tubing material, there is a disadvantage in that, at the end of the dispensing, the tubing can be fed inadvertently into the interior of the waste disposal device before this end can be sealed. This can create a health hazard, particularly if the waste disposal apparatus is a toilet. By adapting the dispenser, so that the second end of the tubing is prevented from passing through the aperture, this prevents inadvertent feeding of the tubing into the waste disposal apparatus without first sealing the tubing. At the point when the device prevents the second end of the tubing from being dispensed further, the second end of the tubing can be sealed, and then the second end of the tubing can be fed into waste disposal device, so that the whole of the tubing, which will typically be filled with waste, can then be removed from waste disposal apparatus, and disposed of and/or used as desired, e.g. for generation of energy.

Also described here is a waste disposal apparatus comprising or adapted to accept the dispenser of flexible tubing as described herein. In the waste disposal apparatus, the flexible tubing, in uncompacted form, may have first and second ends, wherein, in use, the flexible tubing can be dispensed from the dispenser, such that the first end can be passed through the aperture, the apparatus and/or dispenser being adapted to prevent the second end of the tubing passing through the aperture.

### Brief Description of the Figures

Figure 1 shows a dispenser as described herein.
Figure 2 shows an exploded drawing of the dispenser of Figure 1, to illustrate each component separately.
Figure 3A (top figure) shows a view from above the dispenser of Figure 1.
Figure 3B (bottom figure) shows a view from below the dispenser of Figure 1.
Figure 4 shows a cross-sectional view of the dispenser of Figure 1.
Figure 5A (top figure) shows a component of the dispenser of the dispenser of Figure 1, namely a rigid ring for attachment to one end of the tubing.
Figure 5B shows a component of the dispenser of Figure 1, namely an embodiment of the web, which forms an outer packaging for the tubing.
Figure 6 shows the dispenser of Figure 1 having been fitted to a toilet, the outer packaging in this Figure being in a closed state.
Figure 7 shows the dispenser of Figure 6, except with the outer packaging in this Figure now being in an open state, and a hollow frustroconical member having been inserted into the top of the aperture.
Figure 8 shows the dispenser of Figure 7, with a first end of the tubing having been dispensed, passed over the outer sides of the frustroconical member, over the lip of the frustroconical member, then sealed and passed down its inner sides, and through the aperture of the compacted tubing into the housing of the toilet.
Figure 9 shows the dispenser of Figure 8, with most of the tubing having been dispensed, and the rigid ring attached to the second end of the tubing being raised, to trigger a sensor.
Figure 10 shows the dispenser of Figure 8, with the rigid ring having been raised further, until the outer circumference of the frustroconical member widens to a point that the rigid ring cannot be raised any further.
Figure 11 shows a further example of the dispenser, similar to that of figure 1, except that the dispenser of Figure 11 further comprises a frustroconical member within the outer packaging.
Figure 12 shows and exploded view of the dispenser of Figure 11.
Figure 13 shows a top view of the dispenser of Figure 11.
Figure 14 shows a top view of the dispenser of Figure 11.
Figure 15 shows a cross-sectional view of the dispenser of Figure 11.
Figure 16 shows the frustroconical member of the dispenser Figure 11, and the rigid ring and outer packaging.
Figure 17 shows the dispenser of Figure 1 having been fitted to a toilet, the outer packaging in this Figure being in a closed state.
Figure 18 shows a further dispenser, at a point in which most of the tubing has been dispensed from the dispenser, and in which an end of the inner tubing is adhered to an inner surface of the flexible outer web.
Figure 19A shows a further dispenser, in which the flexible outer web is in the form of two bands, each of which surrounds a relatively straight portion of an elongated ring of compacted flexible tubing.
Figure 19B shows (from a perspective above the aperture of the ring of compacted tubing material) the dispenser of Figure 19A, in which the aperture of the ring of the compacted tubing has been elongated to an extent such that the each band contacts the other.
Figures 20A, 20B and 20C show, from different perspectives, a dispenserin which the outer flexible web is in the form of a shrink-wrapped material that envelopes the entire ring of compacted tubing material. In this embodiment, similar to that of Figure 19B, the aperture of the ring of compacted tubing material has been elongated, such that opposing inner sides of the tubing almost touch, these sides being separated only by a spacer member.
Figures 21A and 21B show a dispenserin which the outer flexible web 1 is formed from the same tubing material as the compacted flexible tubing 2. Figure 21C illustrates a dispenser similar to that shown in Figures 21A and 21B, which further includes rigid annular members at each end of the compacted tubing.

### Detailed Description

Preferable and optional features will now be described. Any preferable or optional feature may be combined with any other preferable or optional feature and will only fall under the invention as they fall within the scope of the appended claims.

The flexible tubing preferably comprises a flexible material, such as a material suitable for forming a bag for accepting waste. The flexible tubing is preferably formed from a tube of film, which may be a plastic film. The material of the tubing, which may be or comprise a plastic film, is preferably a film having a thickness of 0.5 mm or less, optionally 0.2 mm or less, optionally 0.1 mm or less, optionally 75 µm or less. The material of the tubing, which may be or comprise a plastic film, is preferably a film having a thickness of from 10 µm or more, optionally from 10 µm to 100 µm, optionally from 20 µm to 50 µm, optionally from 20 µm to 40 µm. The film of the tubing may comprise, consist essentially of, or consist of a polymer selected from, for example, polyethylene, polypropylene, polyester, nylon and polyvinyl chloride. In an embodiment, the film of the tubing may comprise, consist essentially of, or consist of a bioplastic. A bioplastic may be a plastic derived from renewable biomass sources, such as a source selected from vegetable fats and oils, starch, such as corn starch or pea starch, and microbiota. In an embodiment, the plastic film may comprise, consist essentially of, or consist of a biodegradable plastic. A biodegradable plastic may be defined as a plastic capable of being decomposed by bacteria or other living organisms. The biodegradable plastic preferably comprises, consists essentially of or consists of a polymer that meets one or both of European standards, EN 13432 or EN 14995. In an embodiment, the biodegradable plastic may be a plastic that meets the requirements for anaerobic biodegradability, e.g. as set out in standard tests such as ASTM D5511-02 and ASTM D5526. Such plastics are commercially available. The flexible tubing preferably has low gas permeability. The flexible tubing preferably has the ability to support and/or increase methane production from waste, e.g. faeces, in an anaerobic environment. The flexible tubing may comprise, consist essentially of or consist of a biodegradable plastic selected from polyhydroxyalkanoates (PHAs) such as poly-3-hydroxybutyrate, polyhydroxyvalerate (PHV), polyhydroxyhexanoate (PHH), polylactic acid (PLA), polybutylene succinate (PBS), polycaprolactone (PCL), polyanhydrides, polyvinyl alcohol, starch-derived plastics, cellulose esters such as cellulose acetate and nitrocellulose. The flexible tubing may comprise the same material as or a different material from the outer flexible web. The flexible tubing and/or the outer flexible web may be transparent.

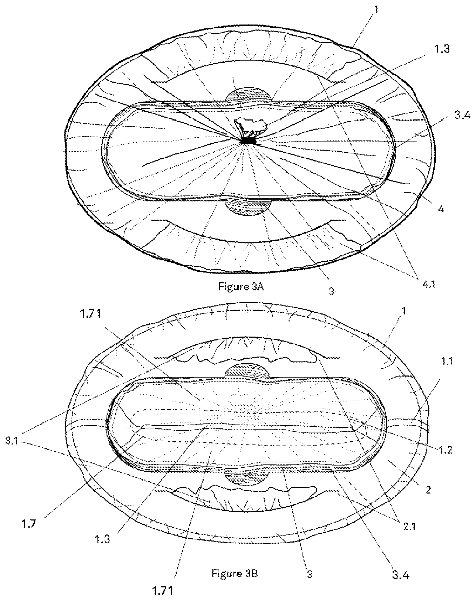

The flexible tubing is formed from an extended tube of film, which has been compressed longitudinally to form a ring of compacted film, having an aperture through the ring. The sides of the film have been concertinaed in the compacting. The ring of compacted film has an aperture extending therethrough, into which the outer web can extend. The aperture (when viewed in a direction along its length, e.g. as shown in Figure 3B) in the compacted flexible tubing is preferably elongated, e.g. in that it has a length A and a width B, measured in a direction perpendicular to A, and the aspect ratio of A/B is more than 1, e.g. 1.1 or more, e.g. 1.5 or more, e.g. 2 or more, e.g. 2.5 or more, e.g. 2.8 or more, e.g. 3 or more. In an embodiment, the aspect ratio of A/B is from 1 to 5, optionally from 1.5 to 5, optionally from 1.5 to 4.5, optionally from 2 to 4, optionally about 2.5 to 3.5, optionally about 3. In an embodiment, the flexible tubing may be elongate, such that the ring has been compressed at two opposing points on the outer surface that extends circumferentially around the ring. The flexible tubing may be elongate, e.g. having been compressed at two opposing points on the outer surface that extends circumferentially around the ring, such that the inner flexible web disposed over one side of the aperture contacts, or is in close proximity to, the inner flexible web disposed on the opposite side of the aperture, "Close proximity to" may indicate a distance of, for example, 1 cm or less, optionally 0.5 cm or less, optionally 0.2 cm or less. In an embodiment, the flexible tubing may be elongate, e.g. having been compressed at two opposing points on the outer surface that extends circumferentially around the ring, such that one side of the aperture contacts, or is in close proximity to, the opposite side of the aperture, and, in an embodiment, a spacer member is disposed in the aperture. The spacer member may function to maintain a separation between the closest opposing sides of the aperture. The spacer member may comprise or be a sheet material having a thickness of 1 cm or less, optionally 0.5 cm or less, optionally 0.2 cm or less. In an embodiment, the spacer member extends only part way through the depth of the aperture, such that the outer flexible web may extend into the aperture in at least some of the portion that is not occupied by the spacer member.

As indicated above, the ring of compacted film has an aperture extending therethrough. "Extending therethrough" indicates it extends either partially through the ring of tubing (e.g. such that the tubing has one open end of the aperture, e.g. on an annular surface of the ring) or completely through the ring of tubing (e.g. such that the tubing has two open ends, e.g. one on each opposing annular surface of the ring, connected by the aperture running through the ring between the two open ends). Before the tubing has been dispensed, the aperture may extend partially through the ring or the whole way through the ring of compacted flexible tubing. In an embodiment, before the tubing is dispensed, the aperture extends the entire way through the ring; in such an embodiment, the end of the tubing that is dispensed first can be sealed before being fed through the aperture of the tubing, such that the sealed end can act as a closed end of the tubing for holding waste, e.g. after feeding the sealed end of the tubing into the interior of an apparatus for the disposal of waste. In the embodiment having the outer flexible web, when the web is in a closed state, the aperture extends the entire way through the ring; this is to allow a rigid shaft (which forms part of a waste disposal apparatus) to be inserted into one end of the aperture, and the hollow member, as described below, to be inserted into the other end of the aperture, such that the tubing can be fed (when the outer flexible web is in an open state) over an exterior surface of the hollow member, then sealed, and fed through the interior of the hollow member, then through the aperture of the compacted tubing. The hollow member is a member having two open ends and an aperture extending through the member between the two open ends, and one of the open ends has a greater width than the other open end, and the smaller of the open ends is inserted into the aperture of the ring of compacted flexible tubing. In an embodiment having the hollow member, the ring of compacted flexible tubing may initially have had an aperture extending the entire way through the ring, and the hollow member may have been inserted into the one end of the aperture of the ring, and the tubing then fed over an outer surface of the hollow member and then sealed across an open end of the hollow member, such that the sealed end of the tubing can then be dispensed and fed through the interior of the hollow member and through the aperture of the ring of compacted flexible tubing.

The flexible outer web is preferably sufficiently flexible that it can conform around the three-dimensional shape of the ring of compacted flexible tubing. The flexible outer web may comprise, consist essentially of, or consist of a material selected from a plastic film, a netting material and a fabric. The outer flexible web may be termed an outer packaging herein.

The flexible outer web, which may be or comprise a plastic film, is preferably a film having a thickness of 0.5 mm or less, optionally 0.2 mm or less, optionally 0.1 mm or less, optionally 75 µm or less. The flexible outer web, which may be or comprise a plastic film, is preferably a film having a thickness of 40 µm or more, preferably 50 µm or more. The plastic film may comprise, consist essentially of, or consist of a polymer selected from, for example, polyethylene, polypropylene, polyester, nylon, polyvinyl chloride. In an embodiment, the plastic film may comprise, consist essentially of, or consist of a bioplastic. A bioplastic may be a plastic derived from renewable biomass sources, such as a source selected from vegetable fats and oils, starch, such as corn starch or pea starch, and microbiota. In an embodiment, the plastic film may comprise, consist essentially of, or consist of a biodegradable plastic. A biodegradable plastic may be defined as a plastic capable of being decomposed by bacteria or other living organisms. The biodegradable plastic preferably comprises, consists essentially of or consists of a polymer that meets one or both of European standards, EN 13432 or EN 14995. In an embodiment, the biodegradable plastic may be a plastic that meets the requirements for anaerobic biodegradability, e.g. as set out in standard tests such as ASTM D5511-02 and ASTM D5526. Such plastics are commercially available. The outer flexible web may comprise, consist essentially of or consist of a biodegradable plastic selected from polyhydroxyalkanoates (PHAs) such as poly-3-hydroxybutyrate, polyhydroxyvalerate (PHV), polyhydroxyhexanoate (PHH), polylactic acid (PLA), polybutylene succinate (PBS), polycaprolactone (PCL), polyanhydrides, polyvinyl alcohol, starch-derived plastics, cellulose esters such as cellulose acetate and nitrocellulose.

In an embodiment, the flexible outer web is formed from a shrink-wrapped material. The shrink-wrapped material may envelope the whole of the ring of compacted flexible tubing.

In an embodiment, the flexible web may be or comprise a netting material. The netting material may comprise fibrous strands running in different directions, and may be optionally fused or adhered at intersections of the strands, with strands running in the same direction being spaced apart, such that the netting has apertures therethrough. In an embodiment, the netting may comprise a first set of fibrous strands that run in a direction perpendicular to a second set of strands, with adjacent strands running in the same direction in the first and second set being spaced apart from one another, and optionally strands in the first set being fused with or adhered to the second set of strands at the intersections between the strands. The netting material or the strands of the netting material, may comprise, consist essentially of, or consist of a polymer selected from, for example, polyethylene, polypropylene, polyester, nylon, polyvinyl chloride. The netting material or the strands of the netting material may comprise, consist essentially of, or consist of a bioplastic. The netting material or the strands of the netting material may comprise, consist essentially of, or consist of a biodegradable plastic. The bioplastic or biodegradable plastic may be as defined above.

In an embodiment, the flexible web may be or comprise a fabric. The fabric may be a woven or non-woven fabric. The fabric may comprise woven or non-woven fibres and the fibres may comprise, consist essentially of, or consist of a polymer selected from, for example, polyethylene, polypropylene, polyester, nylon, polyvinyl chloride. The fabric may comprise woven or non-woven fibres and the fibres may comprise, consist essentially of, or consist of a bioplastic. The fabric may comprise woven or non-woven fibres and the fibres may comprise, consist essentially of, or consist of a biodegradable plastic. The bioplastic or biodegradable plastic may be as defined above.

In an embodiment, the outer flexible web comprises a cellulosic material, such as paper or card. The flexible outer web, which may be or comprise paper or card, is preferably has a thickness of 1 mm or less, preferably 0.5 mm or less, optionally 0.2 mm or less, optionally 0.1 mm or less, optionally 75 µm or less. The flexible outer web, which may be or comprise paper or card, preferably has a thickness of a thickness of 40 µm or more, preferably 50 µm or more.

The flexible outer web extends over at least part of the first and second annular surfaces and the outer surface of the compacted flexible tubing, and extends at least part way into the aperture of the compacted flexible tubing that is in the form of a ring (which can, for brevity, be termed a ring of compacted flexible tubing). "Extends over" can indicate that the outer flexible web is disposed over a certain surface of the compacted flexible tubing, but the outer flexible tubing need not be in contact with the certain surface of the compacted flexible tubing, and one or more other components, e.g. the rigid annular member, as described herein, or one or more layers of material may be disposed between the outer flexible web and the certain surface of the ring of compacted flexible tubing. In an embodiment, the flexible outer web extends over at least part of the first and/or second annular surfaces and the outer surface of the ring of compacted flexible tubing that extends circumferentially around the exterior of the ring. A surface of the compacted flexible tubing may be formed from the concertinaed outer and/or inner surface of tubing. For example, the outer surface of the ring of compacted flexible tubing that extends circumferentially around the exterior of the ring is typically formed from the concertinaed outer surface of tubing. Each of the annular surfaces of the ring of compacted flexible tubing may be formed, for example, from layers of the tubing material compacted together and lying over one another. In an embodiment, the annular surface may have a curved, flat or irregular shape, when viewed in cross section. In an embodiment, the annular surface may appear as a ridge, when viewed in cross section.

The flexible outer web extends at least part way into the aperture. In an embodiment, it may contact the interior surface of the ring of compacted flexible tubing material that defines the aperture in the ring. Preferably, the flexible outer web extends in a substantially uncompressed manner along an inner surface of the compacted flexible tubing material that defines the aperture, e.g. such that this part of the outer flexible web has a smooth, unwrinkled or substantially unwrinkled surface.

Optionally, the flexible outer web extends at least part way into the aperture of the ring of compacted flexible tubing and across the aperture, optionally across the whole of the aperture.

Optionally, the flexible outer web extends at least part way into the aperture of the ring of compacted flexible tubing and across the aperture, and, in the part that extends across the aperture, is perforated or otherwise adapted such that the film is weakened relative to the surrounding web, such that, when the dispenser, in its closed state, is placed on a rigid shaft, so that the shaft extends into the aperture in the ring of compacted tubing material the flexible outer web selectively breaks, tears or otherwise opens to form an aperture in the flexible outer web that extends across the aperture of the ring of compacted flexible material. "Otherwise weakened" may indicate that the material of the web is, for example, thinner in this section of the web, compared to the surrounding web, or is formed of a different materal, for example a material having less tensile strength, compared to the material of the surrounding web.

Optionally the outer flexible web has been formed from a tube of film, which may be an extruded tube of flexible film. The tube of film may have been sealed, e.g. heat sealed, at one end.

Optionally, the part of the flexible outer web, which extends across the first annular surface and the aperture, has a closure. Optionally, the part of the flexible outer web, which extends across the first annular surface and the aperture, has a reversibly openable closure, such as a device that clips or ties the web together.

The flexible outer web has been or is perforated with a plurality of perforations that are present in the web that extends over at least one of, optionally two of, optionally all of: the first annular surface, the second annular surface, the outer surface of the compacted flexible tubing and an inner surface of the compacted flexible tubing that defines the aperture. The flexible outer web is perforated and/or has perforations to allow air-flow through the flexible outer web. This assists in manufacture of the dispenser, particularly when compressing the flexible tubing within the web. The perforations may form an array across a surface of the web, e.g. at least one of the aforementioned surfaces of the web, and may be, for example, a regular array or an irregular array. Each of the perforations may be any suitable shape, including, but not limited to, a regular shape, such as a circle, triangle, square, diamond, rectangle, or an irregular shape.

Optionally, the flexible outer web has a base web, and an outer side web and an inner side web connected to and extending from the base web, wherein, in the dispenser, the ring of compacted flexible tubing is disposed on or above the base web, the outer side web of the flexible web extends around the outer surface of compacted flexible tubing (which extends circumferentially around the ring) and the inner side web of the flexible web extends around an inner surface of the ring of compacted flexible tubing, the inner surface defining the aperture in the ring of compacted flexible tubing. In a closed state, the outer flexible web may have a upper web extending over an annular surface of the compacted flexible tubing opposite to the annular surface disposed closest to the base web, and in an open state, an opening is formed above the annular surface of the compacted flexible tubing opposite to the annular surface disposed closest to the base web. Preferably, the outer side web has a circumference larger than the circumference of the inner side web, preferably when the inner side web and outer side web are at full circumferential expansion, i.e. at a point when the surface is smooth, i.e. lacking any wrinkles, around the circumference of the inner and outer side webs, but without stretching the web material circumferentially.

Optionally, the flexible outer web is formable from two films, which may be optionally perforated, and are preferably of the same shape, and joined along their edges, and preferably the films together form a tube having two open ends. The two films may have first and second portions, the first portion having two edges a distance X apart, and a second portion having two further edges, preferably running substantially in the same direction as the edges of the first portion, and of a distance Y apart, where X is more than Y, and wherein the flat films are joined to each other along each of said edges.

Optionally, the flexible outer web is formable from two flat films of the same shape, both flat films having first and second portions, the first portion having two substantially parallel edges of a distance X apart, and a second portion having two further substantially parallel edges, substantially parallel with the edges of the first portion, and of a distance Y apart, where X is more than Y, and wherein the flat films are joined to each other along each of these parallel edges. The two films are preferably joined together along both of the two edges that are a distance X apart and the two edges that are a distance Y apart. The films are also preferably joined or adhered together on a edge of the films that links the edges that are a distance Y apart. The two films can be formed into the outer flexible web that can contain the compacted flexible tubing. In the dispenser, the film in the first portion will extend around the outer surface of the compacted flexible tubing (or in the embodiment described above form the outer side web of the flexible web), and the film in the second portion will extend into the aperture of the ring of compacted flexible tubing (or in the embodiment described above form the inner side web of the flexible web). The two flat films may be formed from a single tubular material having parallel sides, from which portions have been cut away and the sides rejoined to create a narrower section (i.e. the section with edges a distance Y apart). The two flat films may be initially separate films, rather than being formed from a tubular material, the separate films having the sections with edges a distance X and Y apart and adjoined along their edges using a suitable means, such as adhesive or heat seal.

Optionally, when the flexible outer web is in the closed state, the second portion extends into the aperture of the compacted flexible tubing and the first portion extends over the outer surface of the compacted flexible tubing.

The dispenser further comprises a hollow, optionally frustroconical, member having first and second ends, and the first end has a width greater than the second end, and optionally the second end has walls extending away from the first end and into the aperture of the compacted flexible tubing. The first and second ends are open ends and an aperture extends through the hollow member between the first and second ends.

Optionally, the compacted flexible tubing and/or the flexible outer web comprises biodegradable plastic. Optionally, the compacted flexible tubing and/or the flexible outer web comprises anaerobically digestible material.

The flexible outer web may extend around the whole of the circumference of the outer surface of the compacted flexible tubing. Also described herein, the flexible outer web may extend only part way around the circumference of the outer surface of the compacted flexible tubing. Also described herein, the flexible outer web may comprise one or more bands of flexible material, each of which encircles at least one portion of the ring, such that the band of flexible material is disposed over the opposing first and second annular surfaces of the portion of the ring, extends through the aperture of the ring of flexible material and the part of the outer surface on the opposite side of the ring. For brevity herein, when a band is said to encircle or be disposed on a portion of the ring, the band of flexible material is disposed over the opposing first and second annular surfaces of the portion of the ring, extends through the aperture of the ring of flexible material in that portion and also over the part of the outer surface on the opposite side of the ring in that portion. Optionally, a plurality of bands of flexible material encircle a plurality of portions of the ring of compacted flexible tubing. Optionally, two bands are located substantially opposite one another circumferentially on the ring of compacted tubing. Optionally, the ring of compacted flexible tubing is elongate, such that the aperture is elongate, as described herein, and the tubing, when viewed from above the aperture, has two approximately straight portions linked by curved portions, and one or more bands of flexible material are disposed on one of, preferably both of, the straight portions. The one or more bands may comprise an suitable flexible material, including, but not limited to a plastic as described herein, or a cellulosic material, such as paper or card. Paper has an advantage that it is sufficiently strong to keep the flexible tubing compacted, yet can be ripped when desired to allow the tubing to be dispensed.

In an embodiment, the flexible outer web is formed from the same tubing material as the compacted flexible tubing (e.g. is a continuation of the tubing of the compacted flexible tubing). In this embodiment, the dispenser may be formed by (i) producing a ring of compacted flexible tubing having an aperture extending therethrough, opposing first and second annular surfaces and an outer surface extending circumferentially around the exterior of the ring, (ii) then feeding one end of the tubing through the aperture of the ring, (iii) then drawing down this end over the outer surface of the compacted ring, and then, if desired, closing off this end, to form an outer packaging around the compacted portion of the tubing. The closing off of the end may involve tying the end, sealing the end, clipping the end, or gluing the end. The compacted part of the tubing is preferably enclosed in the outer web of flexible material. In use, the end that had been closed off may be opened, and then fed upwards back over the outer surface of the compacted tubing, and then, if desired, through the aperture. The tubing can then be used in an analogous manner as the other embodiments of tubing described herein.

The flexible tubing, in uncompacted form, has first and second ends, wherein, optionally in use, the flexible tubing can be dispensed from the dispenser, such that the first end can be passed through the aperture, the dispenser being adapted to prevent the second end of the tubing passing through the aperture. In an embodiment, the dispenser may comprise a means to prevent the second end of the tubing passing through the aperture. In an embodiment, the dispenser may comprise a device to prevent the second end of the tubing passing through the aperture.

The dispenser may be adapted to prevent the second end of the tubing passing through the aperture in a variety of ways. In an embodiment, the second end of the tubing is adhered to the outer flexible web. The second end of the tubing will define an aperture in the tubing. In an embodiment, the second end of the tubing is adhered to the outer flexible web around at least part, optionally all, of the aperture defined by the second end of the tubing. In an embodiment, the second end of the tubing is adhered to an inner surface of the flexible outer web that extends over a surface of the compacted flexible tubing selected from the first and second annular surfaces and the outer surface extending circumferentially around the exterior of the ring of the compacted flexible tubing. In an embodiment, the flexible outer web extends at least part way into the tubing from the part of the outer web extending over the second annular surface of the ring of compacted flexible tubing, and optionally the second end of the tubing is adhered to one or both of: (i) the part of the outer web extending over the second annular surface of the ring of compacted flexible tubing and (ii) the part of the web extending into the aperture of the ring of compacted flexible tubing. The second end of the tubing may be adhered to the flexible outer web by any suitable means, including, but not limited to, a means selected from heat-sealing the flexible tubing and the outer web together, and adhering the flexible tubing and the flexible outer web together by means of an adhesive. The adhesive may be selected on the basis of the materials used for the flexible tubing and the flexible outer web.

In an embodiment, the dispenser may comprise a means to prevent the second end of the tubing passing through the aperture of the ring of compacted flexible tubing. In an embodiment, the dispenser may comprise a device to prevent the second end of the tubing passing through the aperture. The device may comprise a member that acts to prevent the second end of the tubing passing through the aperture; and the member may be such that it cooperates with another member of the dispenser and/or waste disposal apparatus to prevent, at a certain point, when a predetermined amount of the flexible tubing has been dispensed from the dispenser, the second end of the tubing from moving, e.g. in the direction of the dispensing of the tubing. The member that acts to prevent the second end of the tubing passing through the aperture may be termed a first member herein for brevity. The first member may act to prevent the second end of the tubing expanding circumferentially, such that the area of the aperture defined by the second end of the tubing is smaller than the area of the aperture defined by at least part of the rest of the tubing e.g. the first end of the tubing. The first member may be a member affixed to the second end of the tubing. The first member may be affixed to the second end of the tubing by mechanical means and/or by a means such as heat-sealing or adhesive. The first member may be affixed to the second end of the tubing by mechanical means in the form of parts of the first member that can clip the second end of the tubing in place. The first member may be affixed to the second end of the tubing by mechanical means in the form of first and second parts of the first member that are reversibly movable from a first position to a second position, and, optionally biased toward the first position, such that, in the first position, the first and second parts can hold the flexible tubing between the parts of the first member. In an embodiment, the first member has a slit therein, the first member being formed from resilient material, and the slit allowing the material of the flexible tubing to be inserted into the slit, so that that the flexible tubing is held in place in the slit.

In an embodiment, the device, e.g. the first member as described above, is in the form of an annular member, optionally a rigid annular member. Optionally the rigid annular member acts to prevent circumferential expansion of the flexible tubing. The first member, e.g. the annular member, is preferably made of a material that is rigid, preferably more rigid than the material of the flexible tubing. The annular member may comprise a material selected from, for example, a plastic and a cellulosic material. In an embodiment, the device is in the form of an annular member comprising, consisting essentially of, or consisting of cardboard. The annular member may be formed from a sheet of material that has a thickness greater than the thickness of the material of the flexible tubing. The annular member may be formed from a sheet of material that has a thickness of at least 0.2 mm, optionally at least 0.5 mm, optionally at least 1 mm, optionally at least 1.5 mm, optionally at least 2 mm, optionally at least 2.5 mm, optionally at least 3 mm.

In an embodiment, a second member, which may be the same as the first member, e.g. in shape, materials and/or size, may be affixed to the first end of the tubing (e.g. before the first end of the tubing is dispensed). The second member may be removable from the tubing, e.g. to allow the tubing to be sealed and fed through the aperture of the compacted tubing. In an embodiment, both first and second members are rigid annular members, with the first member affixed to the second end of the tubing and the second member affixed to the first end of the tubing. The presence of the second member, as well as the first member, can assist in the production of the ring of compacted flexible tubing, since both members can be used to compress the tubing into the form of a ring. After production of the dispenser, but before its use, the first and second member can help to maintain the tubing in a compacted form, and keep the aperture through the tubing in a desired shape.

The dispenser may be manufactured by providing a flexible outer web, and combining this with the ring of compacted flexible tubing to form the dispenser. In an embodiment, the flexible outer web may be placed over an elongate rigid member extending from a base, such that the web extends over both the elongate rigid member and the base, and the web forms an annular cavity around the elongate rigid member,
flexible tubing is placed in the annular cavity either in a compacted form in the form of a ring having an aperture or in an uncompacted form, and then compacted into a ring of compacted tubing having an aperture, such that the elongate rigid member and web extending over the elongate rigid member extends into the aperture of the ring of compacted tubing,
forming a closure in the web above the cavity of the compacted flexible tubing.

The dispenser further comprises or is adapted to accept a hollow member having first and second ends, the first end having a width greater than the second end, the hollow member having an aperture extending therethrough that is substantially in line with the aperture of the ring of compacted flexible tubing, such that, in use, when the flexible tubing is uncompacted and dispensed, it can pass up an exterior surface of the hollow member and through the aperture of the hollow member, into the aperture of the compacted flexible tubing. The hollow member may be in the shape of a bowl. The hollow member may be a frustroconical member. Frustroconical may indicate a frustrum of a generally conical shaped object. The cross-section of the conical shape (when viewed through the aperture of the hollow member) can be circular or, preferably, elongated, e.g. in the form of an oval. The walls of the hollow member, e.g. hollow frustroconical member (when taken in cross-section from a side angle from which the first and second ends are visible) can be straight or curved. The hollow member may comprise a material selected from plastic, paper, cardboard, and other materials made from fibre pulp. The hollow member may be relatively rigid, in that it can hold its shape when its second end is placed on a hard surface. In use, the hollow member will preferably be sufficiently rigid so that it holds its shape when the flexible tubing is fed over its outer surface and through its interior. The device (to prevent the second end of the tubing passing through the aperture), e.g. the first member or annular member as described herein, when the dispenser has accepted a hollow member, may act to prevent the second end of the tubing expanding circumferentially, e.g. to an area the same as or larger than the area of the first end of the hollow member, preventing the second end of the tubing passing over the first end of the hollow member.

In an embodiment, the device (to prevent the second end of the tubing passing through the aperture) is in the form of a drawstring, which may extend around the circumference of the second end of the tubing. The drawstring be tightened as desired to prevent circumferential expansion of the second end of the tubing. This may be used in combination with the hollow member, such that the second end of the tubing is prevented from passing over the first (i.e. widest) end of the hollow member by the constraint in circumferential expansion imposed by the drawstring (which may have been tightened to an appropriate amount).

In an embodiment, the device prevents a sufficient length of the tubing passing through the aperture to allow the tubing to be sealed, e.g. tied in a knot, clipped with a suitable clip, sealed with adhesive, etc.

### Waste disposal apparatus

The apparatus forming part of the invention comprises a waste disposal apparatus which is a toilet

The apparatus comprises a rigid tubular member that can be inserted into the aperture of the compacted flexible tubing.

The apparatus comprise a means for drawing the uncompacted flexible tubing through the aperture of the compacted flexible tubing, and according to an example the same means can provide a divide in the tubing, preferably a seal between sides of the tubing, and can draw the tubing downwards. This avoids the need to have both a separate dividing means (e.g. a sealing means) and a separate mechanism for conveying the tubing. This simplifies operation of the toilet, since a single action can be used to form a divide in the tubing (e.g. a seal between the sides of the tubing) and move it downwards.

According to an unclaimed example, the toilet is adapted to separate liquid and solid waste. Preferably, the toilet is adapted to separate liquid and solid waste, such that they can be stored separately within the toilet, and, if present, within the housing of the toilet.

Optionally, the toilet has an aperture, which, in use, would be located in an upper part of the toilet;
the toilet comprising or adapted to receive the dispenser described herein, which is arranged beneath the aperture and can dispense the uncompacted flexible tubing in a downward direction;
wherein the toilet is adapted such that, in operation, while the tubing is moved downward, the toilet may create a divide in the tubing by pressing the sides of the tubing together. Such a toilet is described, for example, in WO2011/144950.

The toilet may comprise a substantially annular seat that defines the aperture of the toilet. The seat may be in the form of an open or closed ring, wherein said open or closed ring defines the aperture. The toilet and seat is preferably sized such that it is comfortable for a human to sit on the seat. The human may be of any age or size within normal biological limits.

Optionally, the toilet comprises a first dividing means, the first dividing means adapted to simultaneously draw the dispensed, uncompacted flexible tubing downwards and create the divide in the tubing by pressing the sides of the tubing together, wherein the divide prevents one or more of solid waste, liquid waste and odour passing through the divide, and the divide created by the first dividing means extends across at least part of the width of the tubing. The first dividing means may be adapted, when not drawing the tubing downwards, to substantially prevent solid waste passing through the divide in the tubing, while allowing liquid waste to pass through the divide in the tubing. The first dividing means may comprise two opposing first and second engagement means, the first and second engagement means, in use, located on opposite sides of the tubing, the first and second engagement means movable from a first position to a second position to a third position, wherein in the first position the engagement means are sufficiently separated from one another such that they do not form a divide in the tubing and in the second and third positions the engagement means are sufficiently close to one another that the divide is formed by pressing the sides of the tubing together, the third position being located below the second position. In an example, the first dividing means comprises first and second movable conveyors for accepting the tubing between them, each of the first and second conveyors having a plurality of corresponding first dividing members thereon, adapted such that, on moving the conveyors in a certain direction, one or more first dividing members from the first conveyor engages with one or more corresponding first dividing members from the second conveyor to press the sides of the tubing together to form the divide in the tubing and draw the tubing downwards. In an embodiment, the first and second conveyors have a plurality of second dividing members thereon adapted to act as a valve to allow liquid waste to flow downwards to a liquid storage means, and when liquid waste is not flowing downwards to the liquid storage means, form a divide in the tubing by pressing the sides of the tubing together.

In an embodiment the apparatus further comprises a devicethat prevents the second end of the tubing passing through the aperture of the compacted flexible tubing, wherein the device may activate a warning to a user of the waste disposal apparatus to prevent the user drawing the second end of the flexible tubing through the aperture of the flexible tubing. The warning may be in the form of a sound, e.g. an alarm noise, or a visual indication, e.g. a light.

The waste disposal apparatus may further comprise a means or device that prevents the second end of the tubing passing through the aperture of the compacted flexible tubing, by means of a sensor that senses when the tubing has uncompacted to a predetermined amount, and prevents the means for drawing the uncompacted tubing through the aperture from drawing any further tubing through the aperture. In an embodiment, the apparatus or device may sense that the predetermined amount has been reached by an increase in pressure required to draw the tubing into the aperture of the uncompacted flexible tubing. In an embodiment, the second end of the tubing may be removably affixed to part of the device, e.g. one or more clips, such that, when the sufficient amount of the tubing has been dispensed, the second end is removed from the device, e.g. the clips, which may activate a sensor, such that a visual or audible alert is produced to warn the user that the tubing has nearly all be dispensed.

The dispenser, toilet and hollow member will now be described with reference to the accompanying, non-limiting figures.

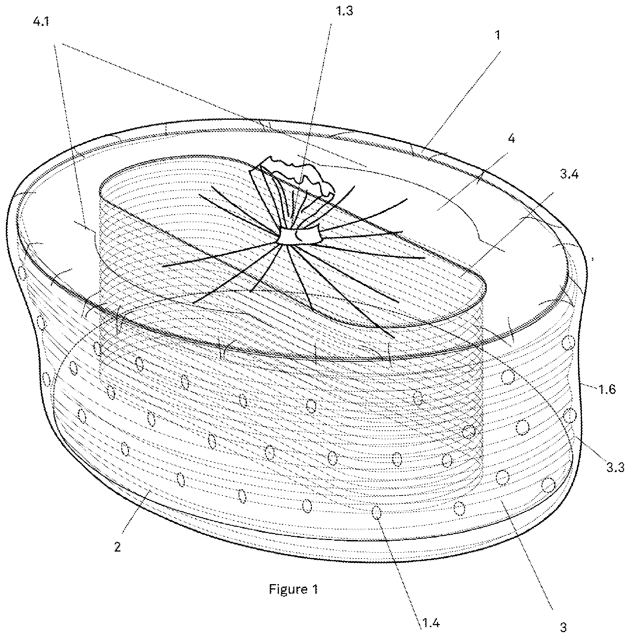

Figure 1 shows a dispenser. In this figure is shown: the outer packaging 1 formed from a flexible outer web, for example a perforated film, rigid annular members 2, 4, and a compressed flexible tubing in the form of a ring. The flexible outer web of the outer packaging 1 is perforated and holes 1.4 are shown in Figure 1, to allow airflow into and out of the packaging, as will be described below. The outer packaging is shown in its closed state in Figure 1, with a closure 1.3 binding the web of the outer packaging together to form a seal over the aperture 3.4 of the flexible tubing 3. The shape of the dispenser, when viewed from above, is oval, and aperture 3.4 is elongated.

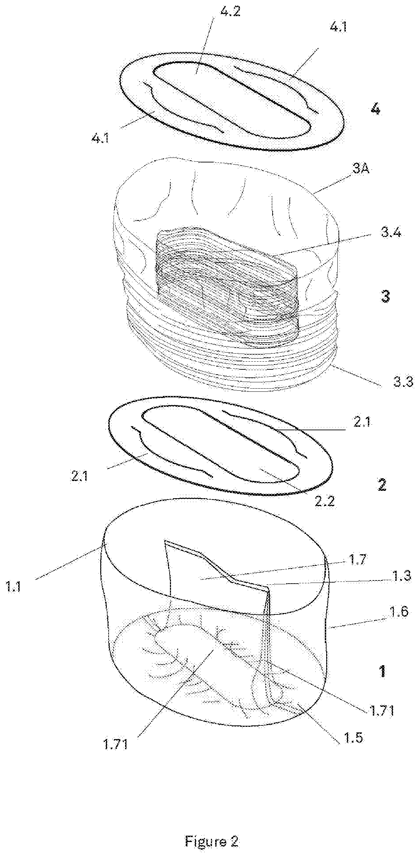

Figure 2 shows an exploded drawing of the dispenser of Figure 1, to illustrate each component separately. It can be seen that the outer web has a relatively flat base 1.5, and exterior web 1.6 that extends around an outer surface 3.3 of the compressed flexible tubing. The outer packaging 1 also has a section 1.7 that extends into the aperture 3.4 of the ring of compressed flexible tubing. The section 1.7 has reasonably flat surfaces 1.71, joined at their left hand and right hand (as shown in the figure) sides and at the top edge by heat seals. The outer packaging may be formed from extruded material, for example an extruded tube of flexible film, or from flat films. The perforations in the outer packaging can be formed, for example, using flatbed or rotary dies. The rigid rings 2, 4 are placed on opposing sides of the compacted flexible tubing, and are joined to each end of the tubing by means of slots 2.1, 4.1 into which the tubing is inserted and held in place. Each ring 2, 4 has an aperture 2.2, 4.2 that is approximately the same shape and size as the aperture 3.4 in the ring of compacted flexible tubing 3. The rings 2,4 may have been die-cut from a sheet material, e.g. using flatbed dies. The outer web, when in a closed state as shown in Figure 1, extends over the outer surface of each ring.

Figure 3A (top figure) shows a view from above the dispenser of Figure 1. Here, the closure 1.3 can be seen, and the upper rigid ring 4, having slots 4.1. It can be seen that some of the material of the tubing 3 has been inserted into the slots 4.1 of the upper rigid ring 4.1 from the upper side of the rigid ring.

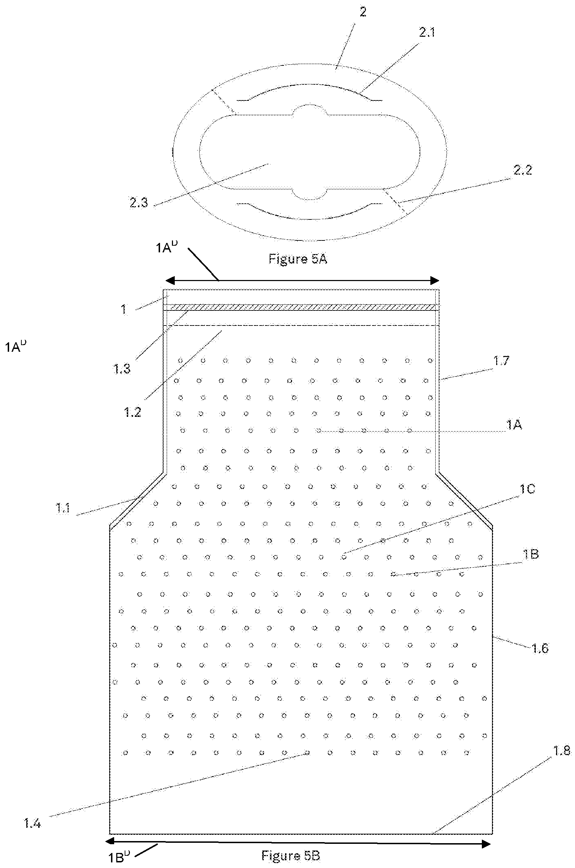

Figure 3B (bottom figure) shows a view from below the dispenser of Figure 1. From this perspective, the viewer is looking up into the aperture 3.4 of the compacted flexible tubing through the base 1.5 of the outer packaging 1. The lower rigid ring 2, having slots 2.1 can be seen. Some of the material of the tubing 3 has been inserted into the slots 4.1 of the upper rigid ring 4.1 from the upper side of the rigid ring, and some of the material 3.1 of the tubing extends through slots 2.1 and can be seen on the underside of the rigid ring 2. From this perspective, the section 7.1 of the web extending into the aperture 3.4 of the ring of the compacted flexible tubing 3 can be seen. The sides 1.71 of section 1.7 are joined by heat seal 1.3 that extends along the length of the elongated aperture 3.4. A perforation 1.2 is provided in the upper part of section 1.7 that extends along each of sides 1.71 of the web, just below the heat seal 1.3. Also shown in this figure is heat seal 1.1 that joins together two pieces of film that form the outer web (this is illustrated in Figure 5 below, too).

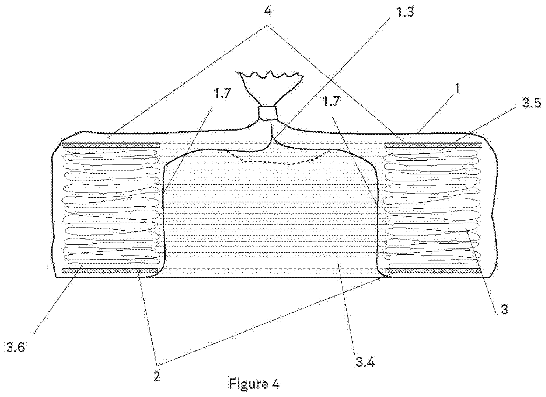

Figure 4 shows a cross-sectional view of the dispenser of Figure 1. This cross sectional view shows the concertina of the compacted flexible tubing 3, and the aperture 3.4 extending through the compacted tubing 3. The rigid rings 2, 4 are present on the upper and lower opposing surfaces of the ring of compacted tubing. The flexible outer web forming the outer packaging 3 is shown and extends over the opposing annular surfaces 3.5, 3.6 of the ring of compacted tubing and the rigid rings 2, 4 disposed on the opposing annular surfaces 3.5, 3.6 of the compacted flexible tubing. The flexible outer web also extends into the aperture 3.4 of the ring of compacted tubing. The sides 1.7 of the web extend along, in a substantially uncompressed manner, the interior surface of the compacted flexible tubing material that forms the aperture 3.4. The web then extends across the aperture and two a films pieces are joined by heat seal 1.3, as shown in other Figures.

Figure 5A (top figure) shows a component of the dispenser of Figure 1, namely a rigid ring 1 for attachment to one end of the tubing. The ring has slots 2.1 extending through the material of the rigid ring, and into which film material can be inserted and held in place. The ring has aperture 2.3, which corresponds typically in shape and size with the aperture in the ring of compacted flexible tubing. The rigid ring also has break tabs 2.2, which may be considered weakened points in the ring, such that a user can rip the ring at this point when desired and remove it from the tubing.

Figure 5B shows a component of the dispenser of Figure 1, namely an example of the web, which forms an outer packaging for the tubing. In this example, the web is formed from a tubular film, adapted so that it has a narrower section 1A and a broader section 1B. In this Figure, the tubular film has been flattened, and view is from above one of the flat surfaces of the flattened tube. The narrower sections 1A and 1B have been formed by cutting away side portions from the flattened tubular film, and then heat sealing the film where shown at sides 1.1 and 1.7. It could be considered, in this flattened form, to be two flat films, joined along their sides at sections 1.7, 1.1 and 1.6, and the view is from above one of the flat films, with the other film being of the same shape and located immediately below the shown film. Each of the flat films has a first portion, 1A and a second portion 1B. Each of portions 1A and 1B have parallel edges a certain distance apart. The distance between the parallel edges of portion 1A is denoted by 1A^{D} in Fig. 5B. The distance between the parallel edges of portion 1B is denoted by 1B^{D} in Fig. 5B. Distance 1B^{D} is larger than distance 1A^{D}. A tapered portion 1C of the films links the parallel edge of section 1A with those of section 1B. The parallel edges of sections 1A and 1B of one flat piece of film are joined to the parallel edges of the other flat film by means of a heat seal 1.7 The edges of the flat films in the tapered portion 1C are again joined by heat seal 1.1. The edges of the flat films linking parallel edges of the portions 1A are joined with a heat seal 1.3. A perforated line 1.2 runs parallel to heat seal 1.3. A array of through-holes 1.4 is present in both films in sections 1A, 1B and 1C. In use, for example when packaging a compacted flexible tubing as shown in Figure 1, the film in section 1A forms the sides 1.7 extending into the aperture of the compacted tubing, the film in tapered section 1C forms the base 1.5 of outer packaging, and the film in section 1B forms the exterior webs or sides 1.6 that extend around the outer surface 3.3 of the ring of compacted flexible tubing. Edge 1.8 would form the rim of the outer packaging when in an open state (as shown schematically in Figure 2).

In a manufacturing process (not shown) to make the dispenser of Figure 1, the outer flexible web may be considered to be the tubing, formed from film as illustrated in Figure 5B. Then, this is placed on a manufacturing base, having a rigid, upwardly extending support that extends into section 1A of the film. The film in section 1B is manipulated so that it extends upwardly, forming an annular cavity between the films in section 1A and 1B, with the section 1C of Figure 5B forming the base. Then, the rigid ring 2 is attached to an end of flexible tubing 3, and placed into the annular cavity, such that the section 1A extends into the aperture of the rigid ring into the tubing. The remaining length of tubing is then compressed in an annular fashion along its length, so that a ring of compacted tubing is formed, with its sides concertinaed. The other end of the tubing is affixed to rigid ring 4, upon which further pressure can be placed to compress the tubing within the annular cavity of the outer web 1. The portion of the outer side of web (i.e. the web that formed the film in section 1B of Figure 5B) extending above the rigid ring 4 can then be folded over the upper surface of the rigid ring and then sealed with closure 1.3 (e.g. by means of a tie or clip).

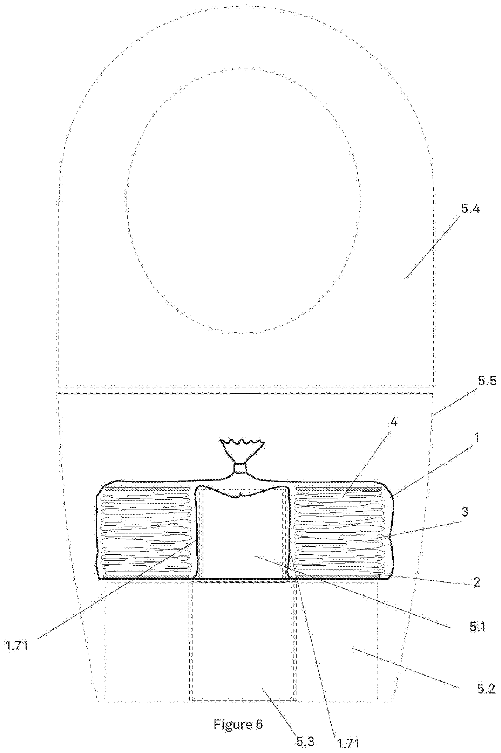

Figure 6 shows the dispenser of Figure 1 having been fitted to a toilet 5, the outer packaging in this Figure being in a closed state. The toilet comprises a hollow shaft 5.1 that extends up into the aperture 3.4 of the compacted flexible tubing. The hollow shaft has rigid walls, made from, for example a rigid plastic material that allows the packaging to be placed over the shaft, such that the shaft extends up into the aperture formed by the aperture 3.4 in the ring of compacted flexible tubing and the walls 1.71 of the web of outer packaging extending into this aperture 3,4. The shaft, when viewed from above, has a size and shape approximately the same as those of the aperture in the compacted flexible tubing, although the dimensions of the shaft may be slightly smaller than the aperture in the outer packaging. The sides 1.71 of the outer web 1 are disposed between the walls of the hollow shaft 5.1 and the compacted flexible tubing 3. The upper portion of section 1.7 having the heat seal 1.3 extends over and covers the hollow toilet shaft. The toilet further comprises a unit 5.3 that draws the flexible tubing down into the interior of the toilet. The unit 5.3 may act to seal the tubing laterally as it is drawn down into the interior of the toilet. The unit 5.3 has a casing 5.2 extending around the unit 1.3 and the upper surface of which acts to support the dispenser above. The toilet also has a seat 5.4, attached to the housing 5.5. of the toilet by means of a hinge (not shown). The seat 5.4 is shown in Figure 6 in an upright position.

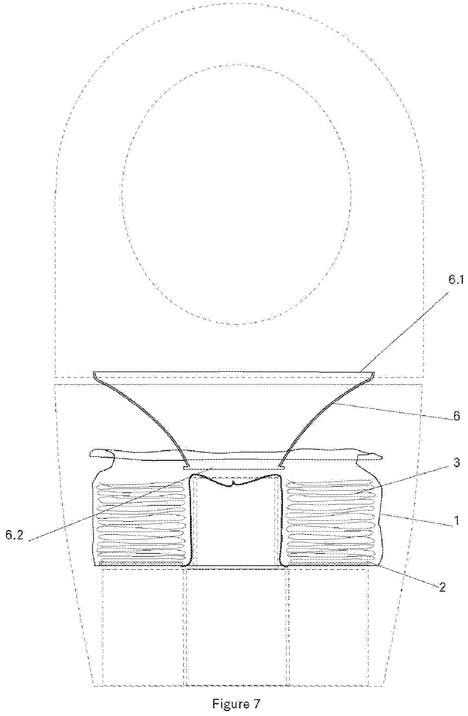

Figure 7 shows the dispenser of Figure 6, except with the outer packaging in this Figure now being in an open state, and the narrow end 6.2 of a hollow frustroconical member 6 having been inserted into the top of the aperture. As can be seen, closure 1.3 has been opened, to create an annular opening in the outer packaging 1 through which the tubing 3 can be dispensed when uncompacted. The upper rigid ring 4 has been removed.

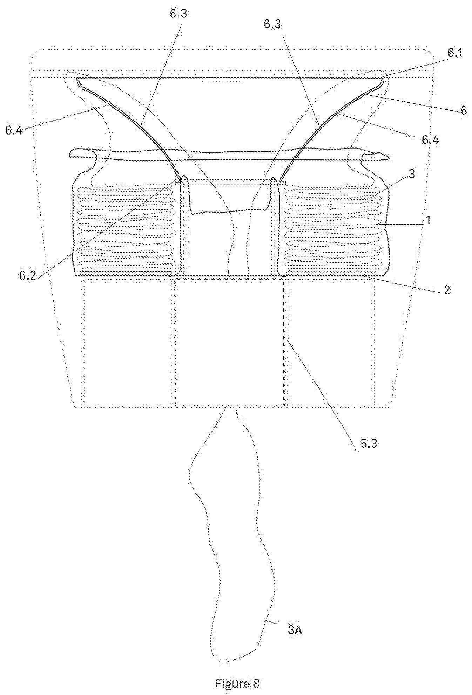

Figure 8 shows the dispenser of Figure 7, with a first end 3A of the tubing having been dispensed, passed over the outer sides 6.4 of the frustroconical member 6, over the lip 6.1 of the frustroconical member, down its inner sides 6.3, and through the aperture of the compacted tubing, and the corresponding aperture of the hollow shaft below, into the housing of the toilet below the unit 5.3. It will also be seen that the web across the aperture of the ring of compacted ring of tubing has been broken across the perforation 1.2 (shown in Figures 3 - 5), to form an aperture in the web. After being passed over the outer sides of the frustroconical member, and before being passed down the inner sides of this member, the end 3A of the tubing is sealed, e.g. by being tied. In an alternative example, the end 3A may be passed in an unsealed form down passed the inner sides of the frustroconical member, through the aperture of the compacted tubing and the hollow shaft into the unit 5.3, which may act to seal the end 3A to prevent waste exiting from end 3A. The unit 5.3 may act to draw down the flexible tubing after each use of the toilet.

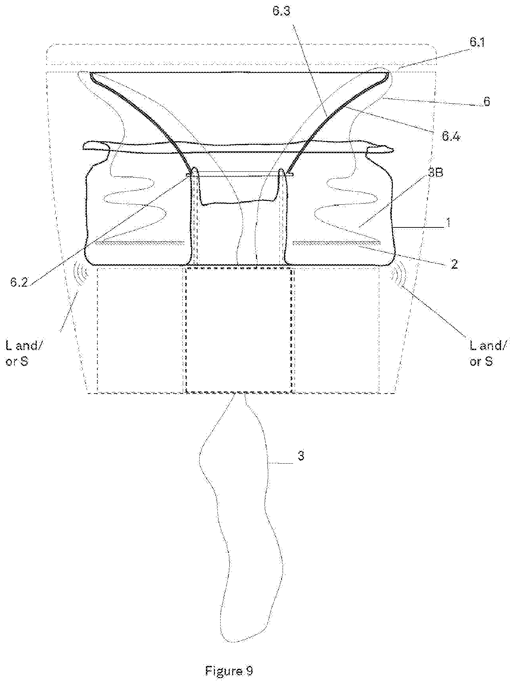

Figure 9 shows the dispenser of Figure 8, with most of the tubing 3 having been dispensed and drawn down into the housing of the toilet 5, through the shaft 5.1 and unit 5.3. As can be seen, the rigid ring 2 is attached to the second end 3B of the tubing. As the tubing is dispensed, the rigid ring will eventually be lifted from its resting position at the bottom of the outer packaging. At a certain point, the rigid ring may engage with a sensor that senses it has been raised to a certain point. The sensor may be linked to an alarm system that triggers a warning, e.g. in the form of a light L or a sound S, when the sensor has been activated when the rigid ring 2 has been raised to a predetermined point. Such a warning can alert a user that nearly all the usable tubing has been dispensed from the dispenser.

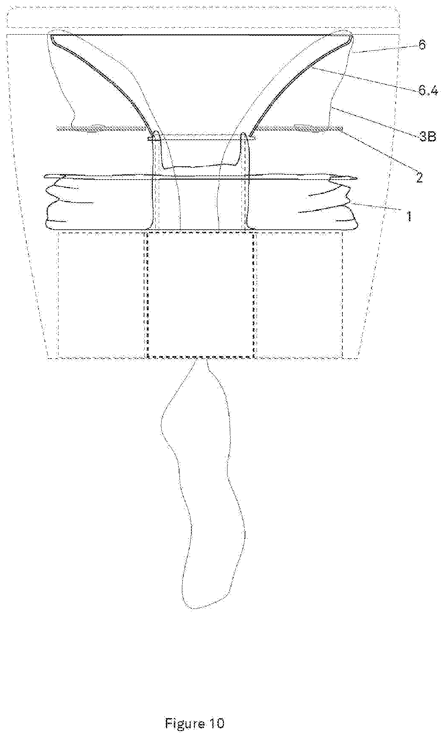

Figure 10 shows the dispenser of Figure 8, with the rigid ring 2 having been raised further, until the outer circumference or surface 6.4 of the frustroconical member widens to a point that the rigid ring cannot be raised any further. Since the rigid ring is attached to the second end 3B of the tubing, once the rigid ring cannot move any further upwards, this also prevents any further tubing from being dispensed and from passing into interior of the toilet housing via the aperture of the hollow shaft 5.1. At this point, the rigid ring 2 can be removed from the end 3B of the tubing 3, and the end of the tubing sealed, for example by being tied together in a knot, to seal waste in the tubing.

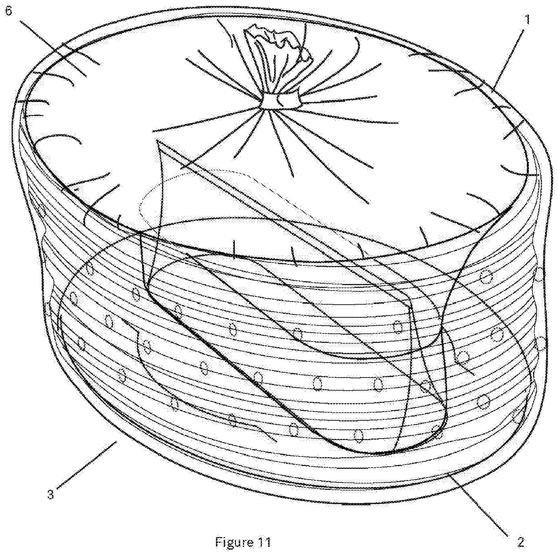

Figure 11 shows a further dispenser, similar to that of figure 1, except that the dispenser of Figure 11 further comprises a frustroconical member 6 within the outer packaging 1. The dispenser further comprises a rigid ring 2 attached to the lower end of the tubing, and disposed on the base of the outer packaging. The narrower end of the frustroconical member extends into the aperture of the ring of compacted flexible tubing.

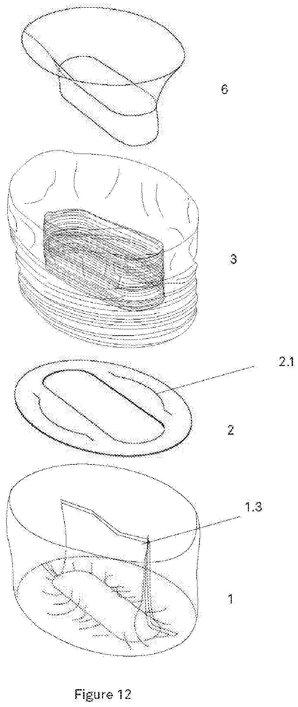

Figure 12 shows an exploded view of the dispenser of Figure 11. The components are the same as those for the dispenser of Figure 2, except for the additional component of the frustroconical member 6. No rigid ring 4 is present on the upper surface of the compacted flexible tubing in this dispenser.

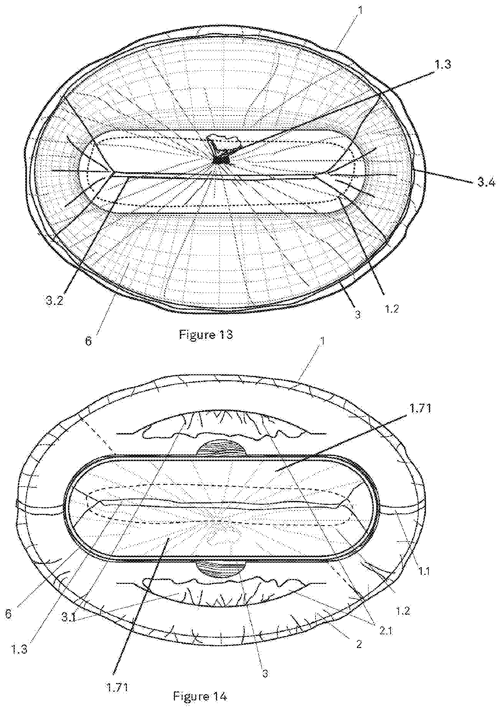

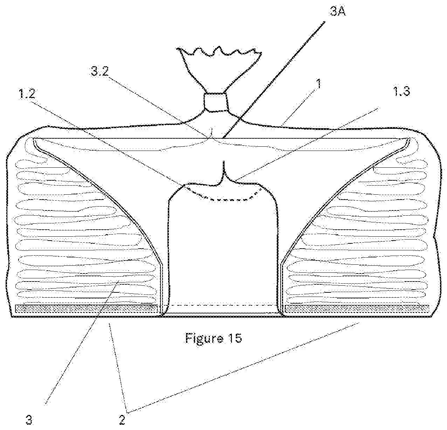

Figure 13 shows a top view of the dispenser of Figure 11. Figure 14 shows a top view of the dispenser of Figure 11. Figure 15 shows a cross-sectional view of the dispenser of Figure 11. As with Figure 12, the components in these Figures are the same as those for the dispenser of Figures 3A and 3B, respectively, except for the additional component of the frustroconical member 6. In this dispenser, the end 3A of the tubing 2 that would be dispensed first from the dispenser has been sealed with a heat seal 3.2.

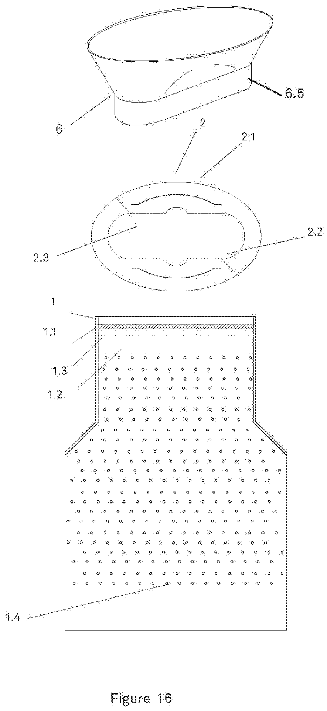

Figure 16 shows the frustroconical member of the dispenser, the rigid ring and outer packaging of the dispenser of Figure 11, The rigid ring 2 is the same as shown in Figure 5A, and the outer packaging is the same as shown in Figure 5B. The frustroconical member can be seen to have walls that taper outwards, with the widest end of the member, in use, being disposed above the narrower end. In this dispenser, the frustroconical member has walls 6.5 extending from its narrowest end, in a direction away from the widest end, such that these walls can be inserted into the aperture of the compacted flexible tubing.

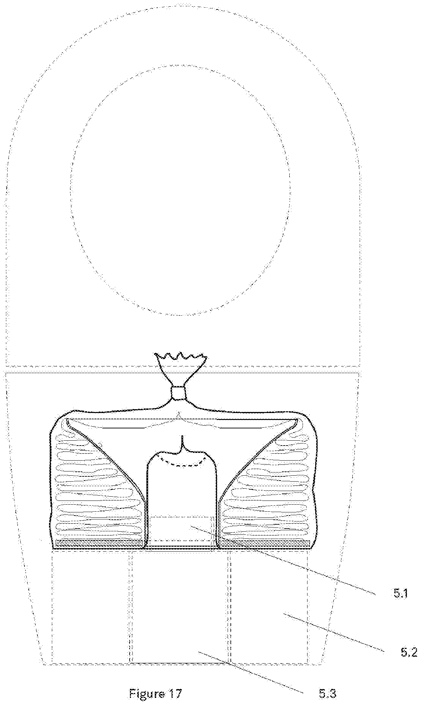

Figure 17 shows the dispenser of Figure 1 having been fitted to a toilet, the outer packaging in this Figure being in a closed state. The use of this dispenser would be much the same as shown in Figures 6 to 10.

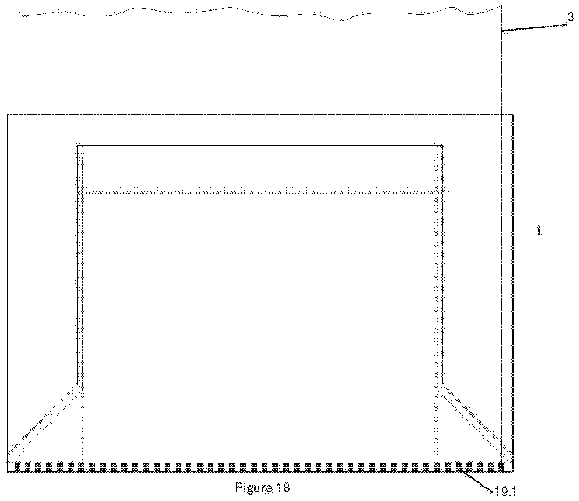

Figure 18 shows a further dispenser. In this dispenser, an end of the inner tubing (termed the second end herein) is adhered to an inner surface of the flexible outer web by means of a heat seal 19.1. This dispenser is shown at a point in which most of the tubing has been dispensed from the dispenser. The aperture defined by the web 3 that (in a closed state of the dispenser) extends into the aperture of the ring of compacted tubing and is shown in Figure 18 (in an open state of the dispenser) extending into the aperture of the extended, uncompacted tubing can act as a means to prevent the second of the tubing being drawn through its own aperture, particularly when a frustroconical member is present as shown in earlier figures. The aperture defined by the web 3 may be such that it cannot pass over the widest end of the frustroconical member, so, in a similar manner to the rigid ring, acts to restrain the tubing from moving upwards and being fed into the interior of the toilet via the aperture defined by the narrow end of the frustroconical member and the shaft. The frustroconical member, the outer flexible web and the second end of the tubing may be removed from the shaft of the toilet, optionally sealed, and then and compressed, folded, or otherwise compacted so that they pass together through the aperture of the shaft of the toilet and into the interior of the toilet.

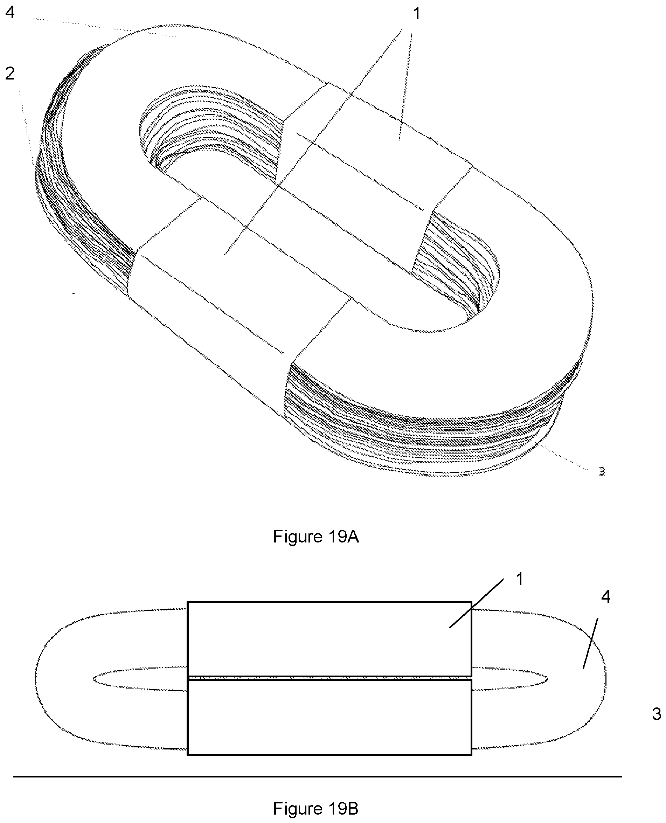

Figure 19A shows a further dispenser, in a closed state, in which the flexible outer web 1 is in the form of two bands, each of which surrounds a relatively straight portion of an elongated ring of compacted flexible tubing 3. The bands 1 may be formed out of any flexible material, such as those disclosed herein. The bands 1 may comprise or consist essentially of or consist of paper or card. Each band may have been formed from a strip of flexible material, e.g. paper or card, which has been wrapped around the ring of compacted flexible tubing 3, and two opposing ends of each strip adhered to one another, such that the material of each band extends through the aperture of the ring of compacted tubing, over the opposing first and second annular surfaces, and the outer surface, of the ring of compacted tubing. In the dispenser shown in Figure 19, two rigid annular members 2, 4 are present on each of the opposing first and second annular surfaces of the ring of tubing. The rigid annular members are disposed between each of the opposing first and second annular surfaces of the ring of tubing and the bands 1. In this closed state, the bands act to compress the rigid annular members together, such that the ring of compacted tubing is compressed. The bands 1 may be broken, e.g. by ripping, cutting, or otherwise forming a break in each band, such that the flexible tubing can be uncompacted and dispensed from the dispenser. The dispenser shown in Figure 19A can be used with a hollow frustroconical member (not shown in Figure 19A), in an analogous manner as the dispenser in preceding Figures, e.g. Figure 7. As shown in Figure 19A, the ring of compacted material is elongated, such that the aperture is elongated. The aperture may be elongated to an extent such that the each band can contact the other (as illustrated schematically in Figure 19B, from a perspective above the aperture of the ring of compacted tubing material). This has the advantage of saving space when storing the dispenser. The bands (and hence the parts of the ring around which the bands are wrapped) may be pulled apart from one another before use of the dispenser (e.g. to allow the dispenser to fit on a rigid shaft, as described above and/or to accept a hollow member, as described herein). The dispenser of Figure 19B may lack the rigid annular members, or have annular members that are adapted to flex at the appropriate point to allow compression of the ring.

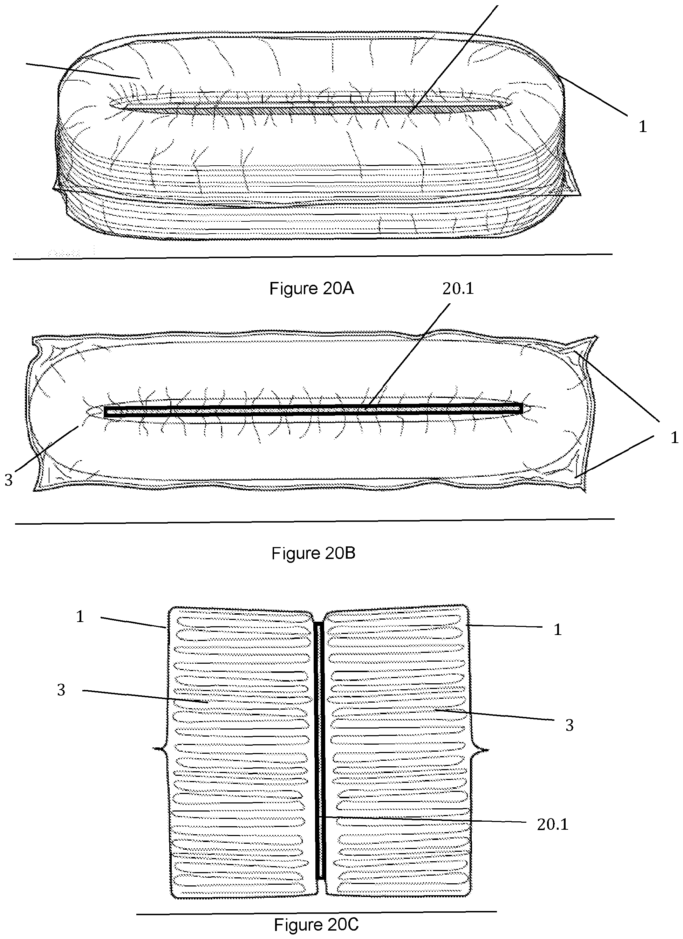

Figures 20A, 20B and 20C show, from different perspectives, a dispenser in which the outer flexible web is in the form of a shrink-wrapped material that envelopes the entire ring of compacted tubing material. In this dispenser, similar to that of Figure 19B, the aperture of the ring of compacted tubing material has been elongated, such that opposing inner sides of the tubing have been brought together and are separated only by a spacer member 20.1 in the form of a sheet that extends along the aperture. Figure 20B shows a view of the dispenser in Figure 20A from above the aperture. Figure 20C shows a cross-sectional view of the dispenser in Figure 20A. It can be seen from the cross-sectional view that the shrink-wrap material extends part way into the aperture at each of its openings in the ring of tubing material. The dispenser in Figures 20A, 20B and 20C may be produced by forming a ring of compacted tubing 1, pressing the sides of the tubing together, such that opposing inner sides of the tubing move closer to one another and the aperture in the tubing elongates, placing a spacer member in the aperture of the ring, and then placing the compacted tubing in a shrink-wrap packaging material (in stretched form), and shrinking the shrink-wrap material around the ring of tubing.

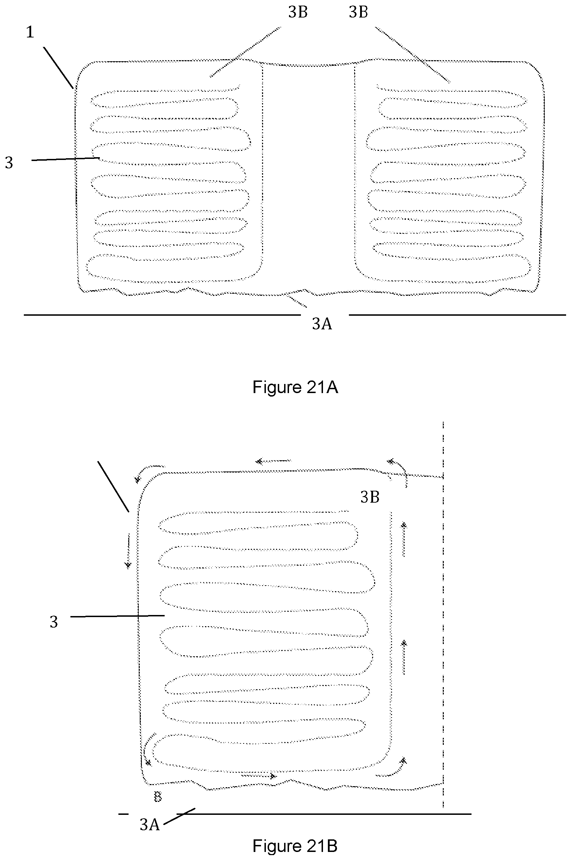

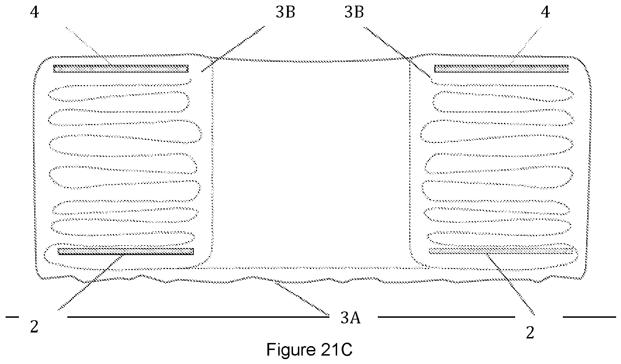

Figures 21A and 21B show a dispenser in which the outer flexible web 1 is formed from the same tubing material as the compacted flexible tubing 2. The dispenser may be formed as follows. First, a ring of compacted flexible tubing is produced (e.g. as illustrated by part 3 in Figure 2). One end of the tubing, 3A, is then fed through the aperture of the ring, and then drawn down the outer surface of the compacted ring. The end 3A can then be tied, glued, or otherwise sealed, so that the compacted part of the tubing is enclosed in an outer web of flexible material. In use, the end 3A would need to be unsealed, and then fed upwards back over the outer surface of the compacted tubing, and then through the aperture. The tubing can then be used in an analogous manner as the tubing shown in previous Figures, e.g. Figures 8 and 9. The rigid annular members 4,2 may be present at each end of the compacted portion of the tubing (and inside the outer web), as shown in Figure 21C.

## Claims

1. A combination of a toilet (5), a dispenser of flexible tubing and a hollow member (6),
wherein the dispenser of flexible tubing is for fitting to the toilet, the dispenser comprising:
a compacted flexible tubing in the form of a ring (3), the compacted flexible tubing having been formed from an extended tube of film, which has been compressed longitudinally to form the ring, the ring having: an aperture (3.4) extending the entire way through the ring, opposing first and second annular surfaces (3.5, 3.6|) and an outer surface (3.3) extending circumferentially around the exterior of the ring and connecting the first and second annular surfaces;
a flexible outer web (1), which can be in a closed or an open state, such that, in a closed state, the flexible outer web extends over at least part of the first and second annular surfaces and the outer surface of the compacted flexible tubing, and extends at least part way into the aperture, the flexible outer web, in the closed state, acting to compress the compacted flexible tubing material, and, in an open state, allowing the flexible tubing to be uncompacted, and dispensed from the dispenser and be formed into a bag for holding liquid and solid waste by sealing an end of the tubing dispensed first from the tubing,
wherein the flexible outer web has a plurality of perforations (1.4) in the part of the web that extends over at least one of: the first annular surface, the second annular surface, the outer surface of the compacted flexible tubing and an inner surface of the compacted flexible tubing that defines the aperture; and,
wherein the toilet comprises:
a rigid hollow shaft (5.1) that can be inserted into one end of the aperture (3.4) of the compacted flexible tubing; and
a means (5.3) for drawing the uncompacted flexible tubing through the aperture of the compacted flexible tubing,
and the hollow member (6) is a member having two open ends (to be termed a first end and a second end) and an aperture (6.3) extending through the member from the first end to the second end, wherein the first end (6.1) has a width greater than the second end (6.2), and the second end of the hollow member can be inserted into the other end of the aperture of the compacted flexible tubing from the rigid shaft,
wherein the dispenser of flexible tubing is adapted to be inserted on the rigid shaft (5.1) of the toilet in the closed state, and then second end of the hollow tubular member (6.5) inserted into the other end of the tubing, such that, in the open state, the flexible tubing can pass up an exterior surface of the hollow member, through the aperture of the hollow member and into the aperture of the compacted flexible tubing and to the means for drawing the uncompacted tubing through the aperture.

2. A combination of a toilet, a dispenser of flexible tubing and a hollow member according to claim 1, wherein the flexible outer web extends in a substantially uncompressed manner along an inner surface of the compacted flexible tubing material that defines the aperture (3.4).

3. A combination of a toilet, a dispenser of flexible tubing and a hollow member according to claim 1 or claim 2, wherein the flexible outer web extends at least part way into the aperture and across the aperture (3.4), and the part that extends across the aperture is perforated compared to the surrounding web.

4. A combination of a toilet, a dispenser of flexible tubing and a hollow member according to any one of the preceding claims, wherein the flexible outer web, in its closed state, extends across the first annular surface and the aperture (3.4) without substantially extending into the aperture, and extends across the second annular surface and into the aperture along the surface of the compacted flexible tubing defining the aperture, and across at least part of the aperture, optionally wherein the part of the flexible outer web, which extends across the first annular surface and the aperture, has a reversibly openable closure.

5. A combination of a toilet, a dispenser of flexible tubing and a hollow member according to any one of the preceding claims, wherein the outer flexible web comprises a base web, and an outer side web and an inner side web connected to and extending from the base web, wherein, in the dispenser, the ring of compacted flexible tubing is disposed on or above the base web, the outer side web of the flexible web extends around the outer surface of compacted flexible tubing (which extends circumferentially around the ring) and the inner side web of the flexible web extends around an inner surface of the ring of compacted flexible tubing, the inner surface defining the aperture in the ring of compacted flexible tubing, optionally:
wherein the base web is annular and the outer side web and inner side web are tubular webs extending from the base web; and/or
wherein the outer side web has a circumference larger than the circumference of the inner side web.

6. A combination of a toilet, a dispenser of flexible tubing and a hollow member according to any one of the preceding claims, wherein the flexible outer web is formable from two flat films of the same shape, both flat films having first and second portions, the first portion having two substantially parallel edges of a distance X apart, and a second portion having two further substantially parallel edges, substantially parallel with the edges of the first portion, and of a distance Y apart, where X is more than Y, and wherein the flat films are joined to each other along their parallel edges,
optionally wherein, when the flexible outer web is in the closed state, the second portion extends into the aperture of the compacted flexible tubing and the first portion extends over the outer surface of the compacted flexible tubing.

7. A combination of a toilet, a dispenser of flexible tubing and a hollow member according to any one of the preceding claims, the dispenser further comprising the hollow member having the first and second ends, the second end having walls extending away from the first end and into the aperture of the compacted flexible tubing.

8. A combination of a toilet, a dispenser of flexible tubing and a hollow member according to claim 1, wherein the flexible outer web (1) is formed from a shrink-wrapped material, optionally:
wherein the shrink-wrapped material envelopes the whole of the ring of compacted flexible tubing (3); and/or
wherein the aperture (3.4), when viewed from above either the first or second annular surface, has an elongated shape, and a spacer member is located in the aperture, to prevent opposing inner surfaces that define the aperture from touching one another.

9. A combination of a toilet, a dispenser of flexible tubing and a hollow member according to any one of the preceding claims, wherein the flexible tubing, in uncompacted form, has first and second ends, wherein, in use, the flexible tubing can be dispensed from the dispenser, such that the first end can be passed through the aperture, the dispenser being adapted to prevent the second end of the tubing passing through the aperture..

10. A combination of a toilet, a dispenser of flexible tubing and a hollow member according to claim 9, wherein the dispenser comprises a device adapted to prevent the second end of the tubing passing through the aperture and the device is in the form of a rigid annular member (2,4), optionally:
wherein the annular member has apertures therein, to allow the flexible tubing to be inserted into the apertures, so that the tubing is removably attached to the annular member; or
wherein the second end of the flexible tubing is adhered to the outer flexible web.

11. A combination of a toilet, a dispenser of flexible tubing and a hollow member according to any one of the previous claims, wherein the hollow member is a frustroconical member (6).

## Patentansprüche

1. Kombination aus einer Toilette (5), einer Ausgabevorrichtung für flexible Rohrleitung und einem Hohlelement (6),
wobei die Ausgabevorrichtung für flexible Rohrleitung zum Anbringen an der Toilette vorgesehen ist, wobei die Ausgabevorrichtung Folgendes umfasst:
eine kompaktierte, flexible Rohrleitung in Form eines Rings (3), wobei die kompaktierte, flexible Rohrleitung aus einer ausgedehnten Schlauchfolie geformt wurde, die in Längsrichtung komprimiert wurde, um den Ring zu bilden, wobei der Ring Folgendes aufweist: eine Öffnung (3.4), die sich über die gesamte Länge durch den Ring erstreckt, gegenüberliegende erste und zweite Ringflächen (3.5, 3.61) und eine Außenfläche (3.3), die sich in Umfangsrichtung um die Außenseite des Rings erstreckt und die ersten und zweiten Ringflächen verbindet;
eine flexible äußere Bahn (1), die in einem geschlossenen oder offenen Zustand vorliegen kann, sodass sich die flexible äußere Bahn in einem geschlossenen Zustand über zumindest einen Teil der ersten und zweiten Ringflächen und der Außenfläche der kompaktierten, flexiblen Rohrleitung erstreckt und sich zumindest teilweise in die Öffnung erstreckt, wobei die flexible äußere Bahn im geschlossenen Zustand dahingehend wirkt, dass sie das kompaktierte, flexible Rohrleitungsmaterial komprimiert und ermöglicht, dass die flexible Rohrleitung im offenen Zustand unkompaktiert ist und aus der Ausgabevorrichtung ausgegeben und zu einem Beutel zum Aufnehmen von flüssigem und festem Abfall geformt wird, indem ein Ende der Rohrleitung versiegelt wird, das zuerst aus der Rohrleitung ausgegeben wird,
wobei die flexible äußere Bahn eine Vielzahl von Perforationen (1.4) in dem Teil der Bahn aufweist, der sich über mindestens eines von Folgendem erstreckt: die erste Ringfläche, die zweite Ringfläche, die Außenfläche der kompaktierten, flexiblen Rohrleitung und eine Innenfläche der kompaktierten, flexiblen Rohrleitung, die die Öffnung definiert; und
wobei die Toilette Folgendes umfasst:
eine starre Hohlwelle (5.1), die in ein Ende der Öffnung (3.4) der kompaktierten flexiblen Rohrleitung eingesetzt werden kann; und
ein Mittel (5.3) zum Ziehen der unkompaktierten, flexiblen Rohrleitung durch die Öffnung der kompaktierten, flexiblen Rohrleitung,
und wobei das Hohlelement (6) ein Element mit zwei offenen Enden (die als ein erstes Ende und ein zweites Ende bezeichnet werden) und einer Öffnung (6.3), die sich durch das Element von dem ersten Ende zu dem zweiten Ende erstreckt, ist, wobei das erste Ende (6.1) eine größere Breite als das zweite Ende (6.2) aufweist, und das zweite Ende des Hohlelements in das andere Ende der Öffnung der kompaktierten flexiblen Rohrleitung von dem starren Schaft eingesetzt werden kann,
wobei die Ausgabevorrichtung für flexible Rohrleitung dazu geeignet ist, im geschlossenen Zustand auf den starren Schaft (5.1) der Toilette aufgesetzt zu werden, und dann das zweite Ende des hohlen, röhrenförmigen Elements (6.5) in das andere Ende der Rohrleitung eingesetzt wird, sodass im offenen Zustand die flexible Rohrleitung an einer Außenfläche des Hohlelements hinauf, durch die Öffnung des Hohlelements und in die Öffnung der kompaktierten flexiblen Rohrleitung und zu den Mitteln zum Ziehen der unkompaktierten Rohrleitung durch die Öffnung geführt werden kann.

2. Kombination aus einer Toilette, einer Ausgabevorrichtung für flexible Rohrleitung und einem Hohlelement nach Anspruch 1, wobei sich die flexible äußere Bahn im Wesentlichen unkomprimiert entlang einer Innenfläche des kompaktierten, flexiblen Rohrleitungsmaterials erstreckt, die die Öffnung (3.4) definiert.

3. Kombination aus einer Toilette, einer Ausgabevorrichtung für flexible Rohrleitung und einem Hohlelement nach Anspruch 1 oder Anspruch 2, wobei sich die flexible äußere Bahn zumindest teilweise in die Öffnung und über die Öffnung (3.4) erstreckt und der Teil davon, der sich über die Öffnung erstreckt, im Vergleich zur umgebenden Bahn perforiert ist.

4. Kombination aus einer Toilette, einer Ausgabevorrichtung für flexible Rohrleitung und einem Hohlelement nach einem der vorhergehenden Ansprüche, wobei sich die flexible äußere Bahn in ihrem geschlossenen Zustand über die erste Ringfläche und die Öffnung (3.4) erstreckt, ohne sich im Wesentlichen in die Öffnung zu erstrecken, und sich über die zweite Ringfläche und in die Öffnung entlang der Oberfläche der kompaktierten, flexiblen Rohrleitung, die die Öffnung definiert, und über zumindest einen Teil der Öffnung erstreckt, wobei optional der Teil der flexiblen äußeren Bahn, der sich über die erste Ringfläche und die Öffnung erstreckt, einen reversibel öffenbaren Verschluss aufweist.

5. Kombination aus einer Toilette, einer Ausgabevorrichtung für flexible Rohrleitung und einem Hohlelement nach einem der vorhergehenden Ansprüche, wobei die äußere flexible Bahn eine Basisbahn sowie eine äußere Seitenbahn und eine innere Seitenbahn, die mit der Basisbahn verbunden sind und sich von dieser erstrecken, umfasst, wobei in der Ausgabevorrichtung der Ring aus kompaktierter, flexibler Rohrleitung auf oder über der Basisbahn angeordnet ist, sich die äußere Seitenbahn der flexiblen Bahn um die Außenfläche der kompaktierten, flexiblen Rohrleitung (die sich in Umfangsrichtung um den Ring erstreckt) erstreckt und sich die innere Seitenbahn der flexiblen Bahn um eine Innenfläche des Rings aus kompaktierter, flexibler Rohrleitung erstreckt, wobei die Innenfläche die Öffnung in dem Ring aus kompaktierter, flexibler Rohrleitung definiert, optional:
wobei die Basisbahn ringförmig ist und die äußere Seitenbahn und die innere Seitenbahn röhrenförmige Bahnen sind, die sich von der Basisbahn erstrecken; und/oder
wobei die äußere Seitenbahn einen Umfang aufweist, der größer als der Umfang der inneren Seitenbahn ist.

6. Kombination aus einer Toilette, einer Ausgabevorrichtung für flexible Rohrleitung und einem Hohlelement nach einem der vorhergehenden Ansprüche, wobei die flexible äußere Bahn aus zwei flachen Folien derselben Form formbar ist, wobei beide flachen Folien erste und zweite Abschnitte aufweisen, wobei der erste Abschnitt zwei im Wesentlichen parallele Kanten mit einem Abstand X aufweist, und ein zweiter Abschnitt zwei weitere im Wesentlichen parallele Kanten aufweist, die im Wesentlichen parallel zu den Kanten des ersten Abschnitts sind und einen Abstand Y voneinander aufweisen, wobei X größer als Y ist, und wobei die flachen Folien entlang ihrer parallelen Kanten miteinander verbunden sind,
wobei optional, wenn sich die flexible äußere Bahn im geschlossenen Zustand befindet, sich der zweite Abschnitt in die Öffnung der kompaktierten, flexiblen Rohrleitung erstreckt und sich der erste Abschnitt über die Außenfläche der kompaktierten, flexiblen Rohrleitung erstreckt.

7. Kombination aus einer Toilette, einer Ausgabevorrichtung für flexible Rohrleitung und einem Hohlelement nach einem der vorhergehenden Ansprüche, wobei die Ausgabevorrichtung ferner das Hohlelement mit dem ersten und dem zweiten Ende umfasst, wobei das zweite Ende Wände aufweist, die sich von dem ersten Ende weg und in die Öffnung der kompaktierten, flexiblen Rohrleitung hinein erstrecken.

8. Kombination aus einer Toilette, einer Ausgabevorrichtung für flexible Rohrleitung und einem Hohlelement nach Anspruch 1, wobei die flexible äußere Bahn (1) aus Schrumpfmaterial gebildet ist, optional:
wobei das Schrumpfmaterial den gesamten Ring aus kompaktierter flexibler Rohrleitung (3) umhüllt; und/oder
wobei die Öffnung (3.4) von oberhalb der ersten oder zweiten Ringfläche betrachtet eine längliche Form aufweist und sich ein Abstandselement in der Öffnung befindet, um zu verhindern, dass sich gegenüberliegende Innenflächen, die die Öffnung definieren, berühren.

9. Kombination aus einer Toilette, einer Ausgabevorrichtung für flexible Rohrleitung und einem Hohlelement nach einem der vorhergehenden Ansprüche, wobei die flexible Rohrleitung in unkompaktierter Form ein erstes und ein zweites Ende aufweist, wobei die flexible Rohrleitung im Gebrauch von der Ausgabevorrichtung ausgegeben werden kann, sodass das erste Ende durch die Öffnung geführt werden kann, wobei die Ausgabevorrichtung dazu geeignet ist, zu verhindern, dass das zweite Ende der Rohrleitung durch die Öffnung hindurchgeht.

10. Kombination aus einer Toilette, einer Ausgabevorrichtung für flexible Rohrleitung und einem Hohlelement nach Anspruch 9, wobei die Ausgabevorrichtung eine Vorrichtung umfasst, die dazu geeignet ist, zu verhindern, dass das zweite Ende der Rohrleitung durch die Öffnung hindurchgeht und die Vorrichtung die Form eines starren, ringförmigen Elements (2,4) aufweist, optional:
wobei das ringförmige Element Öffnungen aufweist, um zu ermöglichen, dass die flexible Rohrleitung in die Öffnungen eingesetzt werden kann, sodass die Rohrleitung abnehmbar an dem ringförmigen Element angebracht ist; oder
wobei das zweite Ende der flexiblen Rohrleitung an der äußeren flexiblen Bahn befestigt ist.

11. Kombination aus einer Toilette, einer Ausgabevorrichtung für flexible Rohrleitung und einem Hohlelement nach einem der vorhergehenden Ansprüche, wobei das Hohlelement ein kegelstumpfförmiges Element (6) ist.

## Revendications

1. Combinaison de toilettes (5), d'un distributeur de tuyaux souples et d'un élément creux (6),
dans laquelle le distributeur de tuyaux souples est destiné à être monté sur les toilettes, le distributeur comprenant :
un tuyau souple compacté sous la forme d'un anneau (3), le tuyau souple compacté ayant été formé à partir d'un tuyau de film allongé, qui a été comprimé longitudinalement pour former l'anneau, l'anneau ayant : une ouverture (3.4) s'étendant sur toute la longueur à travers l'anneau, des première et seconde surfaces annulaires opposées (3.5, 3.61) et une surface externe (3.3) s'étendant circonférentiellement autour de l'extérieur de l'anneau et reliant les première et seconde surfaces annulaires ;
une bande externe souple (1), qui peut être dans un état fermé ou ouvert, de sorte que, dans un état fermé, la bande externe souple s'étend sur au moins une partie des première et seconde surfaces annulaires et de la surface externe du tuyau souple compacté, et s'étend au moins en partie dans l'ouverture, la bande externe souple, à l'état fermé, agissant pour comprimer le matériau de tuyau souple compacté, et, à l'état ouvert, permettant au tuyau souple d'être non compacté, et distribué à partir du distributeur et d'être formé dans un sac pour contenir les déchets liquides et solides en scellant une extrémité du tuyau distribué en premier à partir du tuyau,
dans laquelle la bande externe souple présente une pluralité de perforations (1.4) dans la partie de la bande qui s'étend sur au moins un élément parmi : la première surface annulaire, la seconde surface annulaire, la surface externe du tuyau souple compacté et une surface interne du tuyau souple compacté qui définit l'ouverture ; et,
dans laquelle les toilettes comprennent :
un axe creux rigide (5.1) qui peut être inséré dans une extrémité de l'ouverture (3.4) du tuyau souple compacté ; et
un moyen (5.3) pour tirer le tuyau souple non compacté à travers l'ouverture du tuyau souple compacté,
et l'élément creux (6) est un élément ayant deux extrémités ouvertes (devant être appelées une première extrémité et une seconde extrémité) et une ouverture (6.3) s'étendant à travers l'élément de la première extrémité à la seconde extrémité, dans laquelle la première extrémité (6.1) présente une largeur supérieure à la seconde extrémité (6.2), et la seconde extrémité de l'élément creux peut être insérée dans l'autre extrémité de l'ouverture du tuyau souple compacté à partir de l'axe rigide, dans laquelle le distributeur de tuyaux souples est conçu pour être inséré sur l'axe rigide (5.1) des toilettes à l'état fermé, puis la seconde extrémité de l'élément tubulaire creux (6.5) insérée dans l'autre extrémité du tuyau, de sorte que, à l'état ouvert, le tuyau souple peut remonter une surface externe de l'élément creux, à travers l'ouverture de l'élément creux et dans l'ouverture du tuyau souple compacté et vers le moyen pour tirer le tuyau non compacté à travers l'ouverture.

2. Combinaison de toilettes, d'un distributeur de tuyaux souples et d'un élément creux selon la revendication 1, dans laquelle la bande externe souple s'étend de manière sensiblement non comprimée le long d'une surface interne du matériau de tuyau souple compacté qui définit l'ouverture (3.4).

3. Combinaison de toilettes, d'un distributeur de tuyaux souples et d'un élément creux selon la revendication 1 ou la revendication 2, dans laquelle la bande externe souple s'étend au moins en partie dans l'ouverture et à travers l'ouverture (3.4), et la partie qui s'étend à travers l'ouverture est perforée par rapport à la bande environnante.

4. Combinaison de toilettes, d'un distributeur de tuyaux souples et d'un élément creux selon l'une quelconque des revendications précédentes, dans laquelle la bande externe souple, dans son état fermé, s'étend à travers la première surface annulaire et l'ouverture (3.4) sans s'étendre sensiblement dans l'ouverture, et s'étend à travers la seconde surface annulaire et dans l'ouverture le long de la surface du tuyau flexible compacté définissant l'ouverture, et à travers au moins une partie de l'ouverture, éventuellement dans laquelle la partie de la bande externe souple, qui s'étend à travers la première surface annulaire et l'ouverture, présente une fermeture pouvant être ouverte de façon réversible.

5. Combinaison de toilettes, d'un distributeur de tuyaux souples et d'un élément creux selon l'une quelconque des revendications précédentes, dans laquelle la bande souple externe comprend une bande de base, et une bande latérale externe et une bande latérale interne reliées à et s'étendant depuis la bande de base, dans laquelle, dans le distributeur, l'anneau de tuyau souple compacté est disposé sur ou au-dessus de la bande de base, la bande latérale externe de la bande souple s'étend autour de la surface externe du tuyau souple compacté (qui s'étend circonférentiellement autour de l'anneau) et la bande latérale interne de la bande souple s'étend autour d'une surface interne de l'anneau de tuyau souple compacté, la surface interne définissant l'ouverture dans l'anneau de tuyau souple compacté, éventuellement :
dans laquelle la bande de base est annulaire et la bande latérale externe et la bande latérale interne sont des bandes tubulaires s'étendant depuis la bande de base ; et/ou
dans laquelle la bande latérale externe présente une circonférence plus grande que la circonférence de la bande latérale interne.

6. Combinaison de toilettes, d'un distributeur de tuyaux souples et d'un élément creux selon l'une quelconque des revendications précédentes, dans laquelle la bande externe souple peut être formée à partir de deux films plats de même forme, les deux films plats présentant des première et seconde parties, la première partie présentant deux bords sensiblement parallèles distants de X, et une seconde partie présentant deux autres bords sensiblement parallèles, sensiblement parallèles aux bords de la première partie, et distants de Y, où X est supérieur à Y, et dans laquelle les films plats sont reliés entre eux le long de leurs bords parallèles,
éventuellement dans laquelle, lorsque la bande externe souple est à l'état fermé, la seconde partie s'étend dans l'ouverture du tuyau souple compacté et la première partie s'étend sur la surface externe du tuyau souple compacté.

7. Combinaison de toilettes, d'un distributeur de tuyaux souples et d'un élément creux selon l'une quelconque des revendications précédentes, le distributeur comprenant en outre l'élément creux présentant les première et seconde extrémités, la seconde extrémité présentant des parois s'étendant à l'opposé de la première extrémité et dans l'ouverture du tuyau souple compacté.

8. Combinaison de toilettes, d'un distributeur de tuyaux souples et d'un élément creux selon la revendication 1, dans laquelle la bande externe souple (1) est formée à partir d'un matériau emballé sous film rétractable, éventuellement :
dans laquelle le matériau emballé sous film rétractable enveloppe la totalité de l'anneau de tuyau souple compacté (3) ; et/ou
dans laquelle l'ouverture (3.4), lorsqu'elle est vue du dessus de la première ou de la seconde surface annulaire, présente une forme allongée, et un élément d'espacement est situé dans l'ouverture, pour empêcher les surfaces internes opposées qui définissent l'ouverture de se toucher.

9. Combinaison de toilettes, d'un distributeur de tuyaux souples et d'un élément creux selon l'une quelconque des revendications précédentes, dans laquelle le tuyau souple, sous forme non compacté, présente des première et seconde extrémités, dans laquelle, en utilisation, le tuyau souple peut être distribué du distributeur, de sorte que la première extrémité peut être passée à travers l'ouverture, le distributeur étant conçu pour empêcher la seconde extrémité du tuyau de passer à travers l'ouverture.

10. Combinaison de toilettes, d'un distributeur de tuyaux souples et d'un élément creux selon la revendication 9, dans laquelle le distributeur comprend un dispositif conçu pour empêcher la seconde extrémité du tuyau de passer à travers l'ouverture et le dispositif se présente sous la forme d'un élément annulaire (2, 4), éventuellement :
dans laquelle l'élément annulaire présente des ouvertures, pour permettre au tuyau souple d'être inséré dans les ouvertures, de sorte que le tuyau est fixé de manière amovible à l'élément annulaire ; ou
dans laquelle la seconde extrémité du tuyau souple est collée à la bande souple externe.

11. Combinaison de toilettes, d'un distributeur de tuyaux souples et d'un élément creux selon l'une quelconque des revendications précédentes, dans laquelle l'élément creux est un élément tronconique (6).
